# EUROPÄISCHE PATENTSCHRIFT

(11) **EP 2 867 321 B1**
(45) Veröffentlichungstag und Bekanntmachung des Hinweises auf die Patenterteilung: **05.10.2016**
(21) Anmeldenummer: 13728738.9
(22) Anmeldetag: 13.06.2013
(51) Int. Cl.: C09J 133/26, C09J 133/00, C09J 7/02, B41N 6/02

(54) **HAFTKLEBEMASSE ZUR VERKLEBUNG VON DRUCKKLISCHEES AUF DRUCKZYLINDERN FÜR DEN FLEXODRUCK**
ADHESIVE COMPOSITION FOR ADHERING PRINTING PLATES TO IMPRESSION CYLINDERS FOR FLEXOGRAPHIC PRINTING
COMPOSITION ADHÉSIVE POUR LE COLLAGE DE CLICHÉS SUR DES CYLINDRES D'IMPRESSION FLEXOGRAPHIQUE

(30) Priorität: 27.06.2012 DE 102012211075
(43) Veröffentlichungstag der Anmeldung: 06.05.2015
(73) Patentinhaber: tesa SE, 22848 Norderstedt (DE)
(72) Erfinder: ELLRINGMANN, Kai, 22589 Hamburg (DE); KERBER, Kristin, 22529 Hamburg (DE)
(86) Internationale Anmeldenummer: PCT/EP2013/062249
(87) Internationale Veröffentlichungsnummer: WO 2014/001096

(56) Entgegenhaltungen:
- EP-A1- 2 116 584
- EP-A2- 1 302 521

## Beschreibung

Die Erfindung betrifft eine Haftklebemasse auf Basis eines Polymers erhältlich durch Copolymerisation von (Meth)Acrylsäuremonomeren und die Verwendung einer derartigen Haftklebemasse zum Verkleben flexibler Druckplatten.

In der Druckindustrie sind unterschiedliche Verfahren bekannt, um Motive mittels druckender Vorlagen auf beispielsweise Papier oder Folien zu übertragen. Eine Möglichkeit besteht im sogenannten Flexodruck.

Im Flexodruckverfahren werden flexible Druckplatten (auch als Klischees bezeichnet) auf Druckzylinder oder Druckhülsen (letztere auch als Sleeves bezeichnet) verklebt. Derartige Klischees bestehen beispielsweise aus einer Polyethylenterephthalat-Folie (PET-Folie), auf die eine Schicht eines Fotopolymers aufgebracht ist, in die durch Belichtung der druckenden und anschließendem Auswaschen der nichtdruckenden Elemente das entsprechende Druckrelief eingebracht werden kann. Die Verklebung des Klischees auf dem Druckzylinder bzw. der Druckhülse erfolgt dann über die PET- Folie. Zur Verklebung werden in der Regel doppelseitige Haftklebebänder eingesetzt, an die sehr hohe Anforderungen gestellt werden. Für den Druckprozess muss das Haftklebeband eine bestimmte Härte, aber auch eine bestimmte Elastizität aufweisen. Diese Eigenschaften müssen sehr genau eingestellt werden, damit das erzeugte Druckbild gemäß den Anforderungen das gewünschte Ergebnis liefert. Hohe Anforderungen werden ebenfalls an die Haftklebemasse gestellt, da die Klebkraft ebenfalls ausreichend sein sollte, damit sich die Druckplatte nicht von dem doppelseitigen Haftklebeband oder das Haftklebeband vom Zylinder bzw. der Hülse ablöst. Dies gilt auch bei erhöhten Temperaturen von 40 bis 60 °C und bei höheren Druckgeschwindigkeiten. Neben dieser Eigenschaft muss die Haftklebemasse aber auch reversible Hafteigenschaften besitzen, um die Druckplatten nach den Druckvorgängen wieder ablösen zu können (dabei muss sowohl die Klebeverbindung des Haftklebebandes zum Druckzylinder bzw. zur Druckhülse als auch die zum Klischee rückstandsfrei zu lösen sein, um eine Wiederverwendbarkeit beider Komponenten zu gewährleisten). Diese Ablösbarkeit sollte auch nach einer Verklebung über einen längeren Zeitraum (bis zu 6 Monate) gegeben sein. Zudem ist es erwünscht, dass sich das Haftklebeband und insbesondere die Druckplatte ohne Zerstörung dieser, sowie ohne großen Kraftaufwand wieder entfernen lässt, da die Druckplatten in der Regel mehrfach eingesetzt werden. Zudem sollten keine Rückstände auf der Druckplatte und auf dem Zylinder bzw. der Hülse verbleiben. Zusammenfassend werden somit sehr hohe Anforderungen an die für diesen Einsatz geeigneten doppelseitigen Haftklebebänder gestellt.

Die rückstandsfreie Wiederablösbarkeit ist insbesondere bei polaren Untergründen wie beispielweise Stahl ein Problem, da hier festgestellt wurde, dass die Klebkräfte im Laufe der Zeit erheblich ansteigen. Im Rahmen dieser Schrift werden in Bezug auf Oberflächen die Begriffe "polar" und "hochenergetisch", also mit einer hohen Oberflächenenergie (OFE), gleich gesetzt, ebenso die Begriffe "unpolar" und "niederenergetisch, da sich dieses vereinfachende Modell in der Praxis durchgesetzt hat. Dahinter steht die Erkenntnis, dass polare Dipolkräfte vergleichsweise stark sind gegenüber sogenannten "dispersen" oder unpolaren Wechselwirkungen, die ohne Beteiligung permanenter molekularer Dipole aufgebaut werden. Die Grundlage dieses Modells der Grenzflächenenergie und Grenzflächenwechselwirkungen ist die Vorstellung, dass polare Komponenten nur mit polaren wechselwirken und unpolare nur mit unpolaren.

Gemessen wird diese Energie und ihre Komponenten oft mittels Messung der statischen Kontaktwinkel unterschiedlicher Testflüssigkeiten. Den Oberflächenspannungen dieser Flüssigkeiten werden polare und unpolare Anteile zugeordnet. Aus den beobachteten Kontaktwinkeln der Tropfen auf der Prüfoberfläche werden die polaren und unpolaren Anteile der Oberflächenenergie der Prüfoberfläche ermittelt. Dies kann zum Beispiel nach dem OWKR-Modell erfolgen. Eine industriell übliche alternative Methode ist die Bestimmung mittels Testtinten nach DIN ISO 8296.

Als Haftklebemassen kommen beispielsweise solche auf Naturkautschukbasis in Frage, wie etwa die EP 760 389 A dokumentiert. Für den genannten Einsatzzweck werden aber auch Haftklebebänder eingesetzt, die Haftklebemassen auf Polyacrylatbasis aufweisen.

So beschreibt beispielsweise die WO 03/057497 A (EP-A-1 302 521 und EP-A-2 116 586) eine Acrylathaftklebemasse auf Blockcopolymerbasis für den genannten Anwendungszweck. Die WO 2004/067661 A offenbart ein Haftklebeband mit einer Haftklebemasse auf Basis eines weichen Acrylmonomers (T_{G} < - 20 °C) aus mindestens 49,5 Gew-% eines harten, zyklischen oder linearen (Meth)Acrylsäureester-Monomers (T_{G} ≥ 30°C) und mindestens 10 Gew.-% funktionalisierter harter (Meth)Acrylsäure/-ester-Monomere (T_{G} ≥ 30 °C), wobei die Haftklebemasse in einem zweistufigen Verfahren hergestellt wird.

Ein weiterer Nachteil vieler aus dem Stand der Technik bekannter Haftklebemassen für die Verklebung von Druckklischees zeigt sich insbesondere dann, wenn die verklebten Druckklischees von der Druckfarbe gereinigt werden sollen. Dies wird üblicherweise dadurch bewirkt, dass man die Lösungsmittel, die auch als Lösungsmittel für die Farben an sich dienen, in großer Menge zum Abwaschen und Ablösen der Farben von den Klischees einsetzt. Dabei kommt es aber unweigerlich zu einem Unterkriechen der Ränder der Verklebung des Klischees auf dem Haftklebeband und der Ränder des Klebebandes auf dem Druckzylinder beziehungsweise der Druckhülse. Hierbei kommt es zu einem Ablösen der Verklebung (des Klischees auf dem Klebeband bzw. des Klebebandes auf dem Zylinder bzw. der Hülse), da die Klebemassen des Haftklebebandes die notwendige Haftung verlieren. Die hierdurch entstehenden abgehobenen Kanten ("Fahnen") verhindern weitere Druckvorgänge dadurch, dass sie die Druckfarbe verschmieren, sofern es nicht sogar zu mechanischen Problemen mit den Fahnen in der Druckapparatur und somit zu Systemausfällen kommt. In der Praxis müssen deshalb die Verklebungen von Druckklischees, die mit Klebemassen nach dem Stand der Technik montiert wurden, durch Versiegelung der jeweiligen Ränder mit einseitig klebenden Haftklebebändern oder mit Flüssig- oder Schmelzklebern gegen das Lösungsmittel geschützt werden.

Dieser zusätzliche Versiegelungsprozess bedeutet einen deutlichen Mehraufwand und es besteht die Gefahr, die teuren Druckklischees insbesondere bei Verwendung von Flüssig- oder Schmelzklebern bei der Demontage zu beschädigen.

Die EP 2 226 372 A1 offenbart eine Haftklebemasse auf Acrylatbasis für die Verklebung von Druckplatten auf Zylindern oder Hülsen, die einen hohen Acrylsäureanteil zwischen 8 und 15 Gew.-% aufweist. Weitere Monomere sind lineare und verzweigte Acrylsäureester, die in einem bestimmten Verhältnis zueinander vorliegen. Durch eine solche Klebemasse werden die Anforderungen bezüglich Kantenabhebeverhalten und Lösemittelbeständigkeit recht gut erfüllt. Haftklebemassen mit hohem Acrylsäureanteil neigen aber zu starkem Aufziehen auf polaren Substraten, wie beispielweise Stahl, aus dem Druckzylinder häufig bestehen. Dieses Problem stellt sich auch mit der Klebemasse der EP 2 226 372 A1, insbesondere wenn man sie auf der Seite des Klebebandes einsetzt, die zum Druckzylinder bzw. zur Druckhülse gerichtet ist. Daher ist die Demontage derartiger Klebemassen von solchen Untergründen mit Problemen verbunden; es treten sehr hohe Demontagekräfte auf, und es kann zum Bruch des eingesetzten Klebebandes kommen, oder es verbleiben Rückstände auf dem Substratuntergrund.

Auf die Justierung von Haftklebeeigenschaften für bestimmte Anwendungszwecke hat die Zusammensetzung der Polymerkomponente einen wesentlichen Einfluss. Im Stand der Technik sind eine Reihe von Anmeldungen bekannt, die Haftklebemassen auf Acrylatbasis offenbaren, bei denen aus dem Pool der zugrundeliegenden Monomere unter anderem aus harten Acrylmonomeren, Stearylacrylat, N-alkylsubstituierten Amiden, wie N-tert-Butylacrylamid, und Acrylsäure gewählt werden kann, so in der DE 10 2004 002 279 A1, der DE 103 10 722 A1, der 103 12 031 A1 oder auch der DE 10 2008 023 758 A1. Während die drei erstgenannten Schriften Haftklebemassen für andere Anwendungsbereiche offenbaren, stellt die DE 10 2008 023 758 A1 auf eine vergleichbare Anwendung wie die der vorliegenden Schrift ab.

Keine der aufgeführten Schriften offenbart jedoch eine Haftklebemasse auf Basis einer Monomermischung, die konkret der Zusammensetzung der oben angeführten Monomere entspricht; dies umso weniger in konkret benannten Mengenverhältnissen zueinander. Vorteile, die sich für eine derartige Haftklebemasse - auch in Bezug auf die Masse der DE 10 2008 023 758 A1 - insbesondere in Hinblick auf die Verklebung von Druckklischees auf polaren Untergründen ergeben, lassen sich daher aus keiner der genannten Schriften - auch nicht in Kombination miteinander - ableiten.

Aufgabe der vorliegenden Erfindung ist es, eine Haftklebemasse anzubieten, die auch unter dem Einfluss von Lösungsmitteln eine gute und sichere Verklebung auf im Flexodruck gängigen Material wie insbesondere auf PET (Polyethylenterephthalat) gewährleistet, sich aber dennoch auch nach längerer Zeit auch von sehr polaren Substraten - wie beispielsweise die Oberflächen von Druckzylindern aus Stahl oder die Oberflächen von polaren Kunststoffoberflächen bestimmter Druckhülsen - wieder ablösen lässt. Die Haftklebemasse sollte bevorzugt insbesondere für das sichere Verkleben von Druckklischees geeignet sein; wobei für ein Klebeband mit der Haftklebemasse die Stabilität des Klebebandverbundes, insbesondere die sichere Verankerung der Haftklebemasse auf Schaumträger - wie polyolefinischen Schäumen - gewährleistet sein soll.

Als besonders vorteilhaft zur Lösung der genannten Aufgabe wurde eine Haftklebemasse gefunden, die zumindest eine Polymerkomponente auf Basis einer Monomermischung umfasst, wobei die Monomermischung mindestens die folgenden Monomere enthält:
i.a) 50 - 89,5 Gew.-% zumindest einen Acrylsäureester und/oder Methacrylsäureester mit der folgenden Formel:

   CH₂=C(R₁)(COOR₂),

   wobei
   R₁ = H und R₂ ein linearer Alkylrest mit 2 bis 10 C-Atomen oder ein verzweigter, nichtcyclischer Alkylrest mit mindestens 4 C-Atomen ist
      und/oder
   R₁ = CH₃ und R₂ ein linearer Alkylrest mit 8 bis 10 C-Atomen oder ein verzweigter, nichtcyclischer Alkylrest mit mindestens 10 C-Atomen ist,
i.b) 5 - 20 Gew.-% zumindest ein N-Alkyl-substituiertes Acrylamid
i.c) 5 bis 25 Gew.-% zumindest einen Acrylsäureester und/oder Methacrylsäureester mit der folgenden Formel:

   CH₂=C(R₃)(COOR₄),
wobei R₃ = H oder CH₃ und R₄ ein linearer Alkylrest mit mindestens 12 C-Atomen ist; i.d) 0,5 - 5 Gew.-% Acrylsäure und/oder Methacrylsäure,
wobei die Mengenangaben jeweils auf die Monomermischung bezogen sind.

Als Monomere der Gruppe i.a), werden Ester der Acrylsäure mit linearen Alkoholen mit 2 bis 10 C-Atomen und/oder Ester der Acrylsäure mit verzweigten Alkoholen mit mindestens 4 C-Atomen und/oder Ester der Methacrylsäure mit linearen Alkoholen mit 8 bis 10 C-Atomen und/oder Ester der Methacrylsäure mit verzweigten Alkoholen mit mindestens 10 C-Atomen ausgewählt.

Insbesondere gilt, dass das Homopolymer des jeweiligen Acrylsäureesters beziehungsweise Methacrylsäureesters der Komponente i.a) eine Glasübergangstemperatur T_{G} (bezogen auf DIN 53 765) von höchstens - 20 °C besitzt.

Glasübergangstemperaturen werden angegeben als Ergebnis von Messungen mittels dynamischer Differenzkalorimetrie DDK gemäß der DIN 53 765; insbesondere Abschnitte 7.1 und 8.1, jedoch mit einheitlichen Heiz- und Kühlraten von 10 K/min in allen Heiz- und Kühlschritten (vergl. DIN 53 765; Abschnitt 7.1; Anmerkung 1). Die Probeneinwaage beträgt 20 mg. Eine Vorbehandlung der Haftklebemasse wird durchgeführt (vgl. Abschnitt 7.1, erster Lauf). Temperaturgrenzen: - 140 °C (statt T_{G} - 50 °C) / + 200 °C (statt T_{G} + 50 °C). Die angegebene Glasübergangstemperatur T_{G} ist die Probentemperatur im Heizvorgang des zweiten Laufs, bei der die Hälfte der Änderung der spezifischen Wärmekapazität erreicht ist.

Die Angabe der Glasübergangstemperaturen als Charakteristikum der eingesetzten Monomere erfolgt in Bezug auf deren jeweiliges Homopolymer, das nach der Synthesevorschrift für Acrylathaftklebemassen im experimentellen Teil erhältlich ist, wobei statt der Monomermischung 400 g der jeweiligen Monomere eingesetzt wurden. Bestimmung des T_{G} erfolgt nach Entfernung des Lösemittels im unvernetzten Zustand (in Abwesenheit von Vernetzern).

Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur, also 23 °C) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können.

Haftklebemassen bestehen üblicherweise aus einer Polymerkomponente, auch als Basispolymerkomponente bezeichnet, die ein Homopolymer, ein Copolymer oder eine Mischung aus Polymeren (Homopolymeren und/oder Copolymeren) sein kann, und gegebenenfalls Zusätzen (Cokomponenten, Additiven) zum Teil in erheblichem Umfang. Der Ausdruck "Polymerkomponente auf Basis einer Monomermischung" bedeutet dabei wie allgemein üblich, dass das Polymer durch - insbesondere radikalische - Polymerisation der entsprechenden Monomermischung erhalten werden kann, insbesondere durch ein Verfahren wie im experiementellen Teil beschrieben.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere - also die Zusammensetzung der Monomermischung - bei der Polymerisation der der Haftklebemasse zugrunde liegenden Polymere, mittlere Molmasse und Molmassenverteilung der Polymere sowie durch optionale Beimischung von Zusatzstoffen (Art und Menge) beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur T_{G} unterhalb der Anwendungstemperatur (also üblicherweise unterhalb der Raumtemperatur) aufweisen [zur Angabe der Glasübergangstemperatur siehe oben]. Unterhalb der Glasübergangstemperatur T_{G} verhalten sich Haftklebemassen spröd-elastisch (glasartigamorph bzw. teilkristallin); hier kann kein haftklebriges Verhalten ausgebildet werden. Oberhalb der Glasübergangstemperatur T_{G} erweichen die Massen mit zunehmender Temperatur je nach Zusammensetzung mehr oder weniger stark und nehmen in einem bestimmten Temperaturbereich die für die haftklebrigen Eigenschaften geeigneten Viskositätswerte an, bevor sie bei noch höheren Temperaturen zu dünnflüssig werden, um noch haftklebrige Eigenschaften zu besitzen (es sei denn, sie zersetzen sich vorher). Ein weiteres Kriterium für die Eignung als Haftklebemasse ist die Kohäsion. Üblicherweise muss die Polymermasse eine hinreichende Kohäsion aufweisen, um bei der Verklebung die Haftung vermitteln zu können und nicht aus der Klebefügung zu fließen. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, eingestellt, vergrößert und/oder verschoben werden. Der Anwendungsbereich der Haftklebemassen kann somit durch eine Einstellung zwischen Fließfähigkeit und Kohäsion der Masse optimiert werden.

### Polymerkomponente

Die Polymerkomponente der erfindungsgemäßen Haftklebemasse umfasst ein oder mehrere Polymere, von denen zumindest eines, bevorzugt alle Polymere auf einer Monomermischung umfassend mindestens die vorstehend definierten Monomere i.a) bis i.d) basieren (also aus einer solchen Monomermischung durch Polymerisation erhältlich sind).

Sehr bevorzugt handelt es sich bei der bzw. den Polymeren, die die Polymerkomponente bilden, um solche Polymere, die im Wesentlichen ausschließlich auf Acrylmonomere zurückzuführen sind. Als Acrylmonomere - auch als (Meth)Acrylmonomere bezeichnet - werden im Rahmen dieser Schrift solche Monomere verstanden, die Derivate der Acrylsäure oder der Methacrylsäure sind, einschließlich der genannten Säuren selbst.

Sehr bevorzugt handelt es sich bei der erfindungsgemäßen Haftklebemasse um eine solche, bei der die Polymerkomponente zu mehr als 99 Gew.-%, insbesondere zu 100 Gew.-% auf (Meth)Acrylmonomeren basiert, insbesondere ausschließlich auf solchen (Meth)Acrylmonomeren gemäß der Definitionen i.a) bis i.d). Die oben angeführte Monomeraufstellung für die Polymere der erfindungsgemäßen Haftklebemasse kann somit - im Wesentlichen - abschließend sein, so dass die Monomermischung zur Polymerisation der Polymerkomponente nicht mehr als 1 Gew.-%, insbesondere keine weiteren Comonomere umfasst und insbesondere gilt, dass die Monomermischung außer den genannten Monomeren i.a) bis i.d) weder andere Acrylmonomere noch sonstige anderen Monomere enthält (und somit aus den Monomeren i.a) bis i.d) besteht). Umfasst die Polymerkomponente mehr als ein Polymer, so ist bevorzugt zumindest eines der Polymere, sehr bevorzugt alle Polymere zu mehr als 99 Gew.-%, bevorzugt ausschließlich (zu 100 Gew.-%) auf eine Monomermischung aus den Monomeren i.a) bis i.d) zurückzuführen.

In einer weiteren Ausführungsform der erfindungsgemäßen Haftklebemasse ist es aber auch möglich, dass die Polymerkomponente auf einer Monomermischung basiert, die zusätzlich zu den Monomeren i.a) bis i.d) bis zu 10 Gew.-%, bezogen auf die Monomermischung,

### ii.) copolymerisierbare weitere Monomere

umfasst. Solche copolymerisierbaren weiteren Monomere im Sinne der Gruppe ii.) können beispielweise ganz oder teilweise solche mit zumindest einer einfach oder mehrfach ungesättigten Kohlenstoff-Kohlenstoff-Bindung und/oder ganz oder teilweise solche mit zumindest einer einfach oder mehrfach ungesättigten Kohlenstoff-Heteroatom-Bindung sein. Die Comonomere ii.) können dabei Acrylmonomere (so dass die Polymerkomponente ein Reinacrylatsystem bleibt; zum Beispiel solche Acrylmonomere, deren Glasübergangstemperatur größer als 20 °C ist; insbesondere wenn diese derart gewählt sind (Art und relative Menge zur Komponente i.a)), dass die Glasübergangstemperatur des resultierend Polymeren 20 °C nicht übersteigt) und/oder nichtacrylische Monomere sein.

Erfindungsgemäß enthält die Monomermischung zur Herstellung der Polymerkomponente der erfindungsgemäßen Haftklebemasse Acrylsäure und/oder Methacrylsäure in einem Anteil von 0,5 bis 5 Gew.-%. Zudem ist zumindest ein N-Alkyl-substituiertes Acrylamid zu einem Anteil von 5 bis 20 Gew.-% in der Monomermischung enthalten. Die Monomere der Monomermischung, insbesondere (Meth)Acrylmonomere der Definitionen gemäß i.a) und/oder i.c) und/oder gegebenenfalls vorhandene Monomere der Gruppe ii.), können Hydroxygruppen enthalten, es kann aber erfindungsgemäß hervorragend auf die Anwesenheit von Hydroxygruppen in der Monomermischung - und entsprechend in der resultierenden Polymerkomponente - verzichtet werden, ohne dass dies eine negative Auswirkung auf die Eigenschaften der erfindungsgemäßen Haftklebemasse hätte.

Die erfindungsgemäße Haftklebemasse zeichnet sich dadurch aus, dass außer den vorgenannten Funktionalitäten - Carboxylgruppen, N-Alkyl-substituierte Acrylamide, optional Hydroxygruppen, wobei auf letztere aber vorteilhaft verzichtet wird - und (Meth)Acrylsäureestern, die bevorzugt nicht heterosubstituiert vorliegen, keine weiteren funktionellen Gruppen - wie beispielweise Sulfonsäuregruppen, Lactamgruppen, Lactongruppen, N-heterosubstituierte Amidgruppen, N-substituierte Amingruppen, Carbamatgruppen, Epoxygruppen, Thiolgruppen, Alkoxygruppen, Ethergruppen, Cyangruppen, Halogenidsubstituenten, um nur einige zu nennen - an den Monomeren vorhanden sein müssen, so dass solche funktionellen Gruppen auch in den resultierenden Polymeren nicht auftreten. Vorteilhaft ist also eine erfindungsgemäße Haftklebemasse, deren Makromoleküle frei von funktionellen Gruppen ist, die nicht in der Definition der Monomere gemäß den Gruppen i.a) bis i.d) genannt sind.

Die Polymere der Polymerkomponente der erfindungsgemäßen Haftklebemasse weisen insbesondere vorteilhaft eine zahlenmittlere Molmasse M_{n,P} zwischen 10 000 g/mol und 600 000 g/mol, bevorzugt zwischen 30 000 g/mol und 400 000 g/mol, besonders bevorzugt zwischen 50 000 g/mol und 300 000 g/mol auf. Ihre gewichtsmittlere Molmasse M_{w,P} sollte bevorzugt in einem Bereich zwischen 500 000 und 3 000 000 g/mol liegen, besonders bevorzugt zwischen 800 000 g/mol und 2 200 000 g/mol. Insbesondere liegen die Polydispersitäten M_{w}/Mₙ zwischen 5 und 40.

Angaben zu Molmassen (zahlenmittlere und gewichtsmittlere) und Polydispersitäten im Rahmen dieser Schrift beziehen sich auf die Bestimmung per Gelpermeationschromatographie. Die Bestimmung erfolgt an 100 µl klarfiltrierter Probe (Probenkonzentration 4 g/I). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µ (5 µm), 10³ A (10⁻⁷ m), ID 8,0 mm x 50 mm verwendet. Zur Auftrennung werden die Säulen des Typs PSS-SDV, 5 µ (5 µm), 10³ Å (10⁻⁷ m) sowie 10⁵ Å (10⁻⁵ m) und 10⁶ Å (10⁻⁴ m) mit jeweils ID 8,0 mm x 300 mm eingesetzt (Säulen der Firma Polymer Standards Service; Detektion mittels Differentialrefraktometer Shodex® RI71). Die Durchflussmenge beträgt 1,0 ml pro Minute. Die Kalibrierung erfolgt bezogen auf PMMA-Standards (Polymethylmethacrylat-Kalibrierung)].

### Monomere

Als Monomere im Sinne der Gruppe i.a) werden bevorzugt solche Monomere ausgewählt, deren Homopolymer eine Glasübergangstemperatur T_{G} von höchstens - 20 °C aufweist. Diese sind insbesondere Ester der Acrylsäure mit linearen Alkoholen mit 2 bis 10 C-Atomen oder verzweigten Alkoholen mit mindestens 4 C-Atomen und Ester der Methacrylsäure mit linearen Alkoholen mit 8 bis 10 C-Atomen oder verzweigten Alkoholen mit mindestens 10 C-Atomen. Als spezifische erfindungsgemäße Beispiele werden bevorzugt ein oder mehrere Mitglieder gewählt aus der Gruppe umfassend n-Propylacrylat, n-Butylacrylat, n-Pentylacrylat, n-Hexylacrylat, n-Heptylacrylat, n-Octylacrylat, n-Octylmethacrylat, n-Nonylacrylat, n-Nonylmethacrylat, n-Decylacrylat, n-Decylmethacrylat, Isobutylacrylat, Isopentylacrylat, Isooctylacrylat, Isooctylmethacrylat, die verzweigten Isomere der vorgenannten Verbindungen, wie zum Beispiel 2-Ethylhexylacrylat, 2-Ethylhexylmethacrylat, 2-Propylheptylacrylat.

Als N-Alkyl-substituiertes Acrylamid im Sinne der Monomergruppe i.b) werden bevorzugt N-n-Butylacrylamid, N-sec-Butylacrylamid, N-Octylacrylamid, N-Isopropylacrylamid, N,N-Diisopropylacrylamid, N,N-Dibutylacrylamid, N,N-Dimethylacrylamid und/oder N,N-Diethylacrylamid, ganz besonders bevorzugt N-tert-Butylacrylamid eingesetzt.

Die erfindungsgemäß eingesetzten N-Alkyl-substituierten Acrylamide weisen bevorzugt keine weiteren Heterosubstituenten auf, insbesondere nicht am Stickstoffatom.

Die Monomere der Gruppe i.c) sind solche, die im Polymer zu einer erhöhten Neigung zur Ausbildung teilkristalliner Bereiche führen. Dieses Verhalten wird festgestellt für Acrylsäureester und Methacrylsäureester mit einem linearen Alkylrest mit mindestens 12 C-Atomen im Alkoholrest, bevorzugt von mindestens 14 C-Atomen im Alkoholrest. Im Sinne der Monomergruppe i.c) lassen sich erfindungsgemäß besonders vorteilhaft beispielweise Stearylacrylat und/oder Stearylmethacrylat einsetzen.

Sofern Comonomere im Sinne der Gruppe ii.) vorhanden sind, werden diese beispielweise ganz oder teilweise gewählt aus der Gruppe umfassend Vinylverbindungen wie Vinylester, Vinylether, Vinylhalogenide, Vinylidenhalogenide, Vinylverbindungen mit aromatischen Cyclen und Heterocyclen, insbesondere in α-Stellung zur Doppelbindung. Aber auch andere mit Acrylmonomeren copolymerisierbare Verbindungen sind hier einsetzbar.

### Vernetzung

Um die optimalen Eigenschaften der erfindungsgemäßen Haftklebemasse zu erhalten, sollte diese sehr bevorzugt vernetzt werden.

Eine Methode zur Charakterisierung des Vernetzungszustandes einer Haftklebemasse ist die Bestimmung deren Scherverhaltens. Hierzu dient beispielsweise die Ermittlung der Scherfestigkeit von Schichten aus der betreffenden Haftklebemasse durch Bestimmung des maximalen Mikroscherweges unter einer Temperaturbelastung von 40 °C.

Angaben zum Mikroscherweg im Folgenden als Charakteristikum des Vernetzungszustandes der Haftklebemasse erfolgen in Bezug auf die Scherung in 15 min bei 40 °C eines anfänglich 13 mm x 10 mm großen Flächenstückes mit einer Dicke entsprechend einem Flächengewicht von 50 g/m², bei Belastung mit 1,0 N in Richtung der größeren Längenausdehnung, entsprechend der Methode wie im Abschnitt "Mikroscherweg-Messung / Vernetzungszustand" dieser Schrift beschrieben.

Die erfindungsgemäße Haftklebemasse ist für den Einsatz für die Verklebung von Druckklischees auf Druckzylindern und -hülsen, insbesondere als Klebemassenschicht eines Klebebandes auf der Seite, die dem Druckzylinder bzw. der -hülse zugewandt ist (also bei der Verklebung mit diesen Untergründen in Kontakt steht), insbesondere geeignet, wenn ihr Mikroscherweg in Betreff auf den oben angegebenen Bezug zwischen 100 µm und 300 µm liegt. Die besten Eigenschaften hat die erfindungsgemäße Klebemasse bei einem Vernetzungszustand, der einem Mikroscherweg in Betreff auf den oben angegebenen Bezug zwischen 125 µm und 250 µm entspricht.

Die vorgenannten Werte können gut eingestellt werden durch Einsatz eines geeigneten Vernetzers in einer wohldefinierten Menge, insbesondere bei einer nahezu vollständig ablaufenden Vernetzungsreaktion.

Durch Zugabe geeigneter thermischer Vernetzer ist die erfindungsgemäße Haftklebemasse vorteilhaft thermisch vernetzbar, somit kann auf den Zusatz von aktinisch aktivierbaren Vernetzern, wie beispielsweise durch ultraviolettes Licht aktivierbare Vernetzer (UV-Vernetzer), verzichtet werden. Die thermische Vernetzung kann unter für die Haftklebemasse wesentlich milderen Bedingungen durchgeführt werden, da die Einwirkung der auch zerstörend wirkenden Strahlen vermieden werden kann.

Sofern dies im Einzelfall gewünscht ist, ist es jedoch auch möglich, eine Vernetzung ausschließlich oder zusätzlich durch die Bestrahlung mit aktinischer Strahlung zu bewirken, wobei gegebenenfalls erforderliche oder fördernde Vernetzersubstanzen zugesetzt werden können (z.B. UV-Vernetzer).

In der Regel enthält die erfindungsgemäße Haftklebemasse somit thermische Vernetzer, also solche Substanzen, die unter dem Einfluss thermischer Energie eine Vernetzungsreaktion ermöglichen (initiieren) und/oder fördern.

Die Einstellung des Vernetzungszustandes - insbesondere auf die oben genannten bevorzugten Bereiche - kann beispielweise geschehen durch die Verwendung kovalent reagierender Vernetzer, insbesondere von Epoxiden, Isocyanaten und/oder Aziridinen, und/oder durch die Verwendung koordinativer Vernetzer, insbesondere von Metallchelaten, bevorzugt von Aluminiumchelat.

Metallchelate, wie insbesondere Aluminiumchelate, etwa in Form von Aluminium(III)-acetylacetonat, werden zur Erzielung des oben genannten Vernetzungszustandes bevorzugt in einer Menge von 0,15 bis 0,35 Gew.-Teilen, besonders bevorzugt von 0,2 bis 0,3 Gew.-Teilen, jeweils bezogen auf 100 Gew.-Teile der Polymerkomponente (lösemittelfrei) eingesetzt.

Weitere sehr geeignete thermische Vernetzer sind beispielweise Epoxide enthaltend tertiäre Aminfunktionen, wie insbesondere Tetraglycidyl meta-Xylendiamin (N,N,N',N'-Tetrakis(oxiranylmethyl)-1,3-benzendimethanamin). Diese Verbindungen werden bevorzugt in einer Menge von 0,03 bis 0,1 Gew.-Teile, besonders bevorzugt von 0,04 bis 0,07 Gew.-Teile, beispielweise 0,06 Gew.-Teile, wiederum jeweils bezogen auf 100 Gew.-Teile der Polymerkomponente (lösemittelfrei) eingesetzt, um den oben definierten Vernetzungszustand zu erzielen.

Vorteilhaft wird derart vernetzt, dass die Vernetzungsreaktion möglichst vollständig abläuft. Hierzu ist es günstig, wenn mindestens 85 Gew.-%, bevorzugt mindestens 90 Gew.-% des Vernetzers während der Vernetzungsreaktion umgesetzt werden. Bei einer entsprechenden Umsetzung der Vernetzungsreaktion konnten der oben definierte Vernetzungszustand der Haftklebemasse jeweils realisiert werden.

Gegenstand der Erfindung ist weiterhin ein Verfahren zur Herstellung einer vernetzten Haftklebemasse, wobei zunächst durch radikalische Polymerisation aus einer Monomermischung umfassend die Monomere i.a) bis i.d) eine Polymerkomponente hergestellt wird, während oder bevorzugt nach der Polymerisation zumindest ein thermischer Vernetzer, insbesondere ein oder mehrere der oben aufgeführten Vernetzer, ganz besonders bevorzugt Aluminium(III)-acetylacetonat oder Tetraglycidyl meta-Xylendiamin zugesetzt wird, insbesondere in den oben angegebenen jeweiligen Mengen, der Polymerkomponente gegebenenfalls weitere Polymerkomponenten auf Basis einer Monomermischung umfassend die Monomere i.a) bis i.d) und/oder gegebenenfalls weitere Additive beigemischt werden, und die mit dem Vernetzer vermischte Haftklebemasse durch Zufuhr thermischer Energie so weitgehend vernetzt wird, dass ihr Vernetzungszustand einem Mikroscherweg im Bereich von 100 µm bis 300 µm im Bereich von 125 µm bis 250 µm entsprach (Bezug siehe oben).

### Beimischungen

In bevorzugter Weise ist bereits die Polymerkomponente als solche - ohne wesentliche Anteile an weiteren Bestandteilen - haftklebrig. In einer vorteilhaften Ausgestaltung der Erfindung macht die Polymerkomponente bzw. machen die Polymerkomponenten basierend auf Monomermischungen umfassend die Monomere i.a) bis i.d) mindestens 90 Gew.-%, bevorzugt mindestens 98 Gew.-%, mehr bevorzugt mindestens 98 Gew.-%, besonders bevorzugt mehr als 99,9 Gew.-% der Haftklebemasse aus. Sehr bevorzugt wird ein Wert von 100 Gew.-%. Üblicherweise umfassen Haftklebemassen aber herstellungsbedingt einen geringen Anteil an Verunreinigungen, nicht umgesetzten Monomeren oder dergleichen.

Bei geeigneter Wahl der Monomere, wie sie mit den Monomeren i.a) bis i.d) und gegebenenfalls den Comonomeren ii) definiert sind, kann die erfindungsgemäße Haftklebemasse harzfrei und/oder - unbeschadet der Anwesenheit oder Abwesenheit von Vernetzern (siehe oben) - frei von anderen Additiven eingesetzt werden.

Zur Feinjustierung der Haftklebeeigenschaften oder als beitragende Komponenten zu einer Vernetzungs- oder Härtungsreaktion sind Haftklebemassen häufig Harze beigemischt (klebrigmachende Harze, Reaktivharze). Die erfindungsgemäße Haftklebemasse kann dementgegen hervorragend ohne die Beimischung von Harzen realisiert werden, ohne dass dies einen nachteiligen Einfluss auf ihre Eignung für den genannten Einsatzzweck hätte. Dabei kann sowohl auf klebrigmachende, auf thermoplastische als auch auf Reaktiv-Harze verzichtet werden. Insbesondere führt die Abwesenheit von Harzen zu einer besonders rückstandfreien Substratoberfläche nach der Demontage des Klebebandes, beispielweise zu besonders rückstandsfreien Druckzylindern beziehungsweise Druckhülsen, nachdem das zuvor verklebte erfindungsgemäße Haftklebeband wieder entfernt wurde.

Als Harze werden im Rahmen dieser Schrift insbesondere solche oligo- und (niedrig)polymeren Verbindungen angesehen, deren zahlenmittleres Molekulargewicht Mₙ nicht mehr als 5.000 g/mol beträgt. Selbstredend werden kurzkettige Polymerisationsprodukte, die bei der Polymerisation der oben definierten Monomermischung zur Herstellung der Polymerkomponente der erfindungsgemäßen Haftklebemasse entstehen, nicht unter den Begriff "Harze" subsumiert.

Klebrigmachende Harze - auch als Klebharze bezeichnet - haben häufig Erweichungspunkte im Bereich von 80 bis 150 °C, ohne sich bei der Definition auf diese Spanne einschränken zu wollen. Die Angaben zum Erweichungspunkt T_{E} von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung). Die Messungen erfolgen im Glycerolbad. Solche Harze, auf die bei der erfindungsgemäßen Haftklebemasse verzichtet werden kann, sind beispielsweise natürliche und/oder synthetische Harze, wie Pinen- und Indenharze, Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatischaromatische Kohlenwasserstoffharze, um nur einige zu nennen.

Als Reaktivharze werden solche Harze verstanden, die funktionelle Gruppen derart aufweisen, dass sie weiteren Bestandteilen der Haftklebemasse - wie beispielweise den Makromolekülen der Polymerkomponenten oder anderen Reaktivharzen - unter geeigneter Aktivierung reagieren könnten.

Zur Optimierung der erfindungsgemäßen Haftklebemasse können zudem die dem Fachmann für den jeweiligen Zweck jeweils geläufigen Additive zugesetzt werden. Ein Vorteil der erfindungsgemäßen Haftklebemasse ist es aber, insbesondere auch - abgesehen von den gesondert diskutierten Vernetzern - additivfrei hervorragend für den genannten Einsatzzweck geeignet zu sein. Auf die Anwesenheit von weiteren Additiven - unbeschadet der Anwesenheit oder Abwesenheit von Vernetzern - kann somit verzichtet werden, ohne dass dies nachteilige Auswirkungen auf die vorteilhaften Eigenschaften der Haftklebemasse hätte. So kann insbesondere auf die Beimischung von Additiven wie Weichmachern, Füllmaterialien, funktionellen Zusatzstoffen zur Erzielung bestimmter physikalischer Eigenschaften (wie elektrisch leitfähige Füllmaterialien, thermisch leitfähige Füllmaterialien und dergleichen), Flammschutzmitteln (wie beispielweise Ammoniumpolyphosphat und dessen Derivate) und dergleichen verzichtet werden.

### Verwendung

Die erfindungsgemäße Haftklebemasse ist geeignet zur sicheren Verklebung auf gängigen Materialien und zeichnet sich aus durch eine gute rückstandsfreie Wiederablösbarkeit. Dieses Verhalten zeigt sie insbesondere auch für sehr polare Untergründe, von denen Klebemassen gemäß des Standes der Technik, insbesondere nach längerer Verklebungsdauer, regelmäßig nicht ohne das Zurückbleiben von Rückständen wieder gelöst werden können.

Eine sehr gute Reversibilität, also rückstandsfreie Wiederablösbarkeit, konnte selbst für Untergründe festgestellt werden, deren Oberflächenenergie 45 mN/m oder mehr beträgt, insbesondere sogar für Materialien mit Oberflächenenergien im Bereich von 48 mN/m oder mehr, wie beispielweise Stahl, das nach Literaturangaben den Wert 50 mN/m aufweist.

Gegenstand der Erfindung sind weiterhin die Verwendung der erfindungsgemäßen Haftklebemasse als Klebemassenschicht für Haftklebebänder, insbesondere für doppelseitig klebende Haftklebebänder sowie die entsprechenden Haftklebebänder umfassend eine Schicht der erfindungsgemäßen Haftklebemasse. Solche Klebebänder können insbesondere mit einem Träger, ggf. weiteren Schichten und zwei außenliegenden Klebemassenschichten ausgerüstet sein, die wiederum temporär - zur besseren Handhabung, Lagerung und Anbietung - auf einer oder beiden Haftklebemassenschichten mit einem temporären Abdeckmaterial - auch als Liner bezeichnet - versehen sein können. Bei derartigen doppelseitig haftklebend ausgerüsteten Klebebändern können beide Klebemassenschichten aus der erfindungsgemäßen Haftklebemasse gebildet sein - und insbesondere in ihrer Zusammensetzung und/oder ihrer Dicke und/oder ihrem Vernetzungszustand identisch sein -, oder es kann eine der Klebemassenschichten durch eine erfindungsgemäße Haftklebemasse realisiert sein, während die andere Klebemassenschicht aus einer anderen Haftklebemasse gewählt wird, die optimal auf das entsprechend zu verklebende Substrat abgestimmt sein kann. Als Trägermaterialien für die Haftklebebänder eignen sich die dem Fachmann geläufigen und üblichen Folien, wie zum Beispiel Polyester, Polyethylenterephthalat (PET), Polyethylen (PE), Polypropylen (PP), biaxial orientiertes Polypropylen (BOPP), monoaxial orientiertes Polypropylen (MOPP), Polyurethan (PU), und Polyvinylchlorid (PVC), wobei diese Materialien auch jeweils als geschäumte Schicht eingesetzt werden können.

Es sei darauf hingewiesen, dass die erfindungsgemäße Haftklebemasse auch als Klebemassenschicht anderer Klebebänder, beispielsweise einschichtiger, trägerloser Klebebänder ("Transferklebebänder"), die aus der Klebemassenschicht bestehen, einsetzbar ist.

Die erfindungsgemäße Haftklebemasse kann hervorragend zum Verkleben flexibler Druckplatten auf gekrümmten Oberflächen, insbesondere auf Druckzylindern oder Druckhülsen, eingesetzt werden, insbesondere als Klebemassenschicht eines Haftklebebandes. Die besondere Eignung der erfindungsgemäßen Haftklebemasse für die reversible Verklebung auf Stahl (siehe oben) macht diese für die Verklebung auf Druckzylindern bzw. -hülsen aus diesem Material besonders geeignet. Da die Klebemasse die hervorragenden Eigenschaften aber auch auf anderen Materialien besitzt, können die entsprechenden Haftklebebänder sehr flexibel eingesetzt werden, auch bei der Verwendung im Flexodruck. Besonders bevorzugt kommt die erfindungsgemäße Haftklebemasse dabei als Klebemassenschicht doppelseitiger Haftklebebänder zum Einsatz, wobei die erfindungsgemäße Haftklebemasse die während der Verklebung zum Druckzylinder bzw. zur Druckhülse gerichtete Klebemassenschicht darstellt. Insbesondere werden doppelseitige Haftklebebänder eingesetzt, wie sie vorstehend beschrieben sind. Als Trägermaterial wird dabei vorteilhaft ein geschäumtes Flächengebilde verwendet, zum Beispiel eine Polymerschaumschicht. So lassen sich insbesondere geschäumte Polyolefine - wie Polyethylen und Polypropylen - einsetzen, besonders bevorzugt ist ein Polyethylen/Ethylenvinylacetat-Schaum. Weiterhin können beispielhaft geschäumte Polyurethane oder geschäumte Polyvinylchloride eingesetzt werden. Generell kann durch eine Aufrauhung des Trägermaterials eine Verbesserung der Haftklebemassenverankerung vorgenommen werden. Ein Weg zur Aufrauhung und zur chemischen Modifizierung der Polymerstruktur verläuft über die nasschemische Ätzung des Trägermaterials. Neben der Ätzung kann auch auf andere Weise vorbehandelt werden. So lassen sich zur Verbesserung der Verankerung die Trägermaterialien physikalisch und chemisch vorbehandeln. Zur physikalischen Behandlung wird die Folie bevorzugt mit Flamme oder Corona oder Plasma behandelt. Für die chemische Vorbehandlung wird das Trägermaterial mit Vorstrich versehen, wobei in einer besonders bevorzugten Auslegung Reaktiv-Vorstriche verwendet werden. Als Vorstrichmaterialien eignen sich z.B. Reaktivprimer.

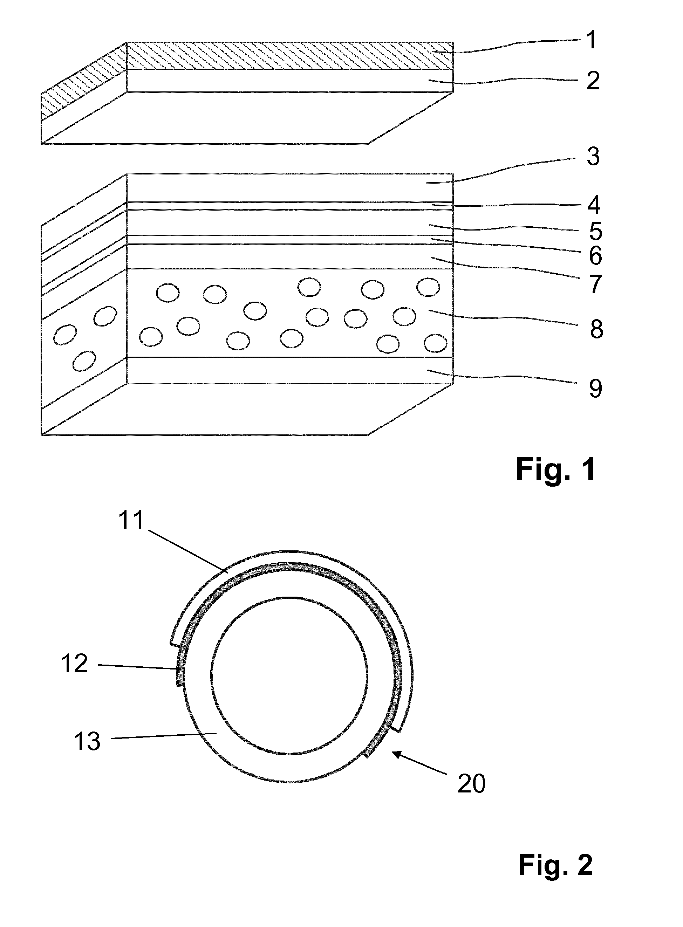

Der Aufbau eines solchen erfindungsgemäßen Klebebandes entspricht dabei in einer sehr bevorzugten Ausgestaltung einer Schichtenfolge, wie sie in Fig. 1 wiedergegeben ist. Dabei wird die erfindungsgemäße Haftklebemasse besonders bevorzugt im Sinne der Klebemassenschicht 9, also der bei der Anwendung zum Druckzylinder oder zur Druckhülse gewandten Klebemassenschicht, eingesetzt, da sie für diesen Einsatzzweck optimiert ist.

Aufgrund des großen Einsatzspektrums der erfindungsgemäßen Haftklebemasse ist diese auch für die Klebeschicht geeignet, die mit dem Druckklischee in Kontakt steht. Das erfindungsgemäße Klebeband dient vorteilhaft zum Verkleben eines Klischees, das sich aus einer PET-Folie 2 und einer Schicht eines Fotopolymers 1 zusammensetzt.

Die Schichten 3 bis 9 bilden ein doppelseitig klebend ausgerüstetes - erfindungsgemäßes - Klischeeklebeband, das dank seines geschäumten Trägers 8 kompressibel und elastisch ist.

Beginnend von der Seite, mittels derer das Klischee verklebt wird, besteht das Klebeband aus folgenden einzelnen Abschnitten:
3 Haftklebemasse zur Verankerung des Klischees
4 Die aufgeraute obere Oberfläche der PET-Folie 5
5 Folie aus Polyethylenterephthalat (PET)
6 Die aufgeraute untere Oberfläche der PET-Folie 5
7 Haftklebemasse zur Verankerung des geschäumten Trägers 8 auf der PET-Folie 5
8 geschäumter Träger
9 Haftklebemasse zur Verankerung auf dem Druckzylinder

Gerade in der Druckindustrie ist es von Bedeutung, dass die hier eingesetzten Klebebänder eine hohe Flexibilität aufweisen, also in gewissem Maße bei Druckanwendung ihre Dicke verändern können beziehungsweise nach Wegnahme der Belastung wieder ihre ursprüngliche Form annehmen können.

Aus diesem Grunde ist in einer weiteren vorteilhaften Ausführungsform des beidseitig klebend ausgerüsteten Klebebands zwischen der Folie aus Polyethylenterephthalat (PET) und zumindest einer Klebemasse ein geschäumter Träger vorhanden, insbesondere zwischen der dem Druckzylinder oder dem Sleeve zugewandten Klebemasse und der Folie aus Polyethylenterephthalat (PET), sofern das Klebeband in der Druckindustrie Verwendung findet.

Vorteilhaft ist darüber hinaus, wenn der geschäumte Träger 8 aus Polyolefin(en), Polyvinylchlorid oder Polyurethan besteht. In einer besonders bevorzugten Auslegung werden geschäumte Polyethylene und/oder Polypropylene eingesetzt. Weiter bevorzugt ist, wenn die Oberflächen des geschäumten Trägers 8 physikalisch vorbehandelt sind, wobei die physikalische Methode zur Vorbehandlung insbesondere gewählt wird aus der Gruppe Coronavorbehandlung, Flammvorbehandlung oder Plasmabehandlung.

Die üblicherweise als "Coronavorbehandlung" bezeichnete physikalische Vorbehandlungstechnik ist meist eine "dielektrische Barrierenentladung" (engl. *dielectric barrier discharge,* DBD), bei der mittels hochfrequenter Wechselspannung Hochspannungsentladungen erzeugt werden. Dabei wird das zu behandelnde Substrat bahnförmig zwischen zwei Hochspannungselektroden durchgeführt, wobei mindestens eine Elektrode aus einem dielektrischen Material besteht oder damit beschichtet ist. Das zu behandelnde Material wird dabei direkt den elektrischen Entladungen ausgesetzt oder zumindest dem durch die Entladungen erzeugten reaktiven Gas. Die elektrischen Entladungen werden oft als "Coronaentladungen" bezeichnet.

Die Coronavorbehandlung als Methode zur Oberflächenvorbehandlung von Trägern wird vielfach industriell eingesetzt. Als Prozessgas dient üblicherweise die Umgebungsluft. Die Verwendung anderer Prozessgase als Luft wie zum Beispiel Stickstoff, Kohlendioxid oder Edelgase ist ebenfalls als Stand der Technik bekannt.

Alternativ kann die dem Träger zugewandte Oberfläche der Haftklebemassenschicht 9 physikalisch vorbehandelt werden, insbesondere durch Coronavorbehandlung, Flammvorbehandlung oder Plasmabehandlung, um die Verbundfestigkeit zwischen der Haftklebemassenschicht und dem Träger zu verbessern. Die physikalische Behandlung der Haftklebemasse kann ebenfalls vorteilhaft in Luft als Prozessgas durchgeführt werden, es können aber als Prozessgase zum Beispiel Stickstoff, Kohlendioxid oder Edelgase verwendet werden. Als vorteilhaft haben sich zum Beispiel Stickstoff oder ein Gemisch aus Luft und Stickstoff herausgestellt.

Zur Erhöhung der Klebkraft zwischen der Haftklebemassenschicht 9 und dem geschäumten Träger 8 hat es sich überraschend als besonders vorteilhaft herausgestellt, wenn sowohl die Haftklebemassenschicht 9 als auch der geschäumte Träger 8 auf ihren sich im Verbund jeweils zugewandten Seiten vor der Zusammenbringung physikalisch vorbehandelt werden, insbesondere durch eine der vorgenannten physikalischen Methoden. Dabei können die Vorbehandlungsmethoden der beiden Schichten unabhängig voneinander gewählt werden, vorzugsweise werden sie durch die gleiche Methode vorbehandelt, besonders vorzugsweise mittels Coronavorbehandlung. Durch eine Vorbehandlung beider Schichten, insbesondere mittels Coronavorbehandlung, wird die innere Festigkeit der Verbindung signifikant verbessert, und die bei Verwendung der erfindungsgemäßen Haftklebemasse bereits geringe Menge eventuell verbleibender Rückstände des Klebebandes bei der Demontage von seinem Untergrund (wie etwa einem Druckzylinder oder einer Druckhülse) kann noch einmal erkennbar verringert werden.

Grundsätzlich ist es nun für den Fachmann überraschend, dass durch die Behandlung einer Klebemassenoberfläche mit einer physikalischen Methode eine Steigerung der Klebkraft erreicht werden kann. Da der Fachmann erwartet, dass alle diese Methoden mit Kettenbrüchen und einem Materialabbau einhergehen, würde die Bildung einer Schicht mit hohem Gehalt an polaren Gruppen, aber geringem innerem Zusammenhalt erwartet. Durch die schwach kohäsive Schicht mit erhöhter Polarität ist eine bessere Benetzung des Substrats durch die Klebemasse nicht überraschend, es werden jedoch reduzierte Adhäsionseigenschaften erwartet.

Die Behandlungsintensität einer Coronavorbehandlung wird als "Dosis" in [W*min/m²] angegeben, mit der Dosis D=P/(b*v), mit P=elektrischer Leistung [W], b=Elektrodenbreite [m], und v=Bahngeschwindigkeit [m/min].

Die Coronavorbehandlung erfolgt bevorzugt bei einer Dosis von 1 bis 150 W*min/m². Besonders bevorzugt sind für die Haftklebemassenschicht eine Dosis von 10 bis 100 W*min/m², insbesondere eine Dosis von 40 bis 60 W*min/m². Für die Schaumträgerschicht werden bevorzugt höhere Dosen verwendet, so sind hier eine Dosis von 50 bis 150 W*min/m² und dabei insbesondere eine Dosis von 80 bis 120 W*min/m² sehr vorteilhaft.

Vorzugsweise hat die Folie aus Polyethylenterephthalat (PET) eine Dicke von 5 µm bis 500 µm, bevorzugt 5 µm bis 60 µm, ganz besonders bevorzugt sind 12 µm und 23 µm.

Neben dem in Figur 1 dargestellten Produktaufbau kann die Stabilisierungsfolie auch aus Polyolefinen, Polyurethanen oder Polyvinylchlorid bestehen und neben der Ätzung auch auf verschiedene Weise vorbehandelt sein. So lassen sich auch hier zur Verbesserung der Verankerung die Stabilisierungsfolien physikalisch und chemisch vorbehandeln. Zur physikalischen Behandlung wird die Folie bevorzugt mit Flamme oder Corona oder Plasma behandelt. Für die chemische Vorbehandlung wird die Folie mit Vorstrich versehen, wobei in einer besonders bevorzugten Ausführungsform Reaktiv-Vorstriche verwendet werden. Als Vorstrichmaterialien eignen sich beispielweise Reaktivprimer. Weiterhin können auch hier - alternativ oder zusätzlich zu der Folienschicht - die angrenzenden Klebemassenschichten vorbehandelt sein, insbesondere entsprechend der oben beschriebenen Klebemassenschicht 9.

In einer weiteren bevorzugten Auslegung wird die Stabilisierungsfolie aus Polyethylenterephthalat oder einem anderen Material ein- oder beidseitig bedruckt. Diese Bedruckung kann unter einer später aufzubringenden Haftklebemasse liegen.

Für die Haftklebemassen 7 kann beispielweise ebenfalls eine Acrylathaftklebemasse eingesetzt werden, aber es sind grundsätzlich auch andere Klebemassentypen verwendbar.

Weiterhin kann das erfindungsgemäße Klebeband ein- oder beidseitig mit einer Abdeckung aus Papier oder aus einer entsprechenden Folie, insbesondere einer beidseitig silikonisierten, versehen sein, um ein längeres Lagern und eine bequeme Handhabung während des Gebrauchs zu gewährleisten.

Aber auch die sonstigen Klebebanddesigns, wie sie aus dem Stand der Technik insbesondere für die Verklebung von Druckklischees oder Druckplatten auf Druckzylindern oder -hülsen bekannt sind, können erfindungsgemäß realisiert sein, wobei durch die erfindungsgemäße Haftklebemasse insbesondere zumindest die Klebemasseschicht zur Verklebung auf dem Zylinder bzw. auf der Hülse realisiert ist.

Aufgrund seiner speziellen Eigenschaften lässt sich das erfindungsgemäße beidseitig klebend ausgerüstete Klebeband hervorragend zur Fixierung von Druckplatten, insbesondere von - insbesondere mehrschichtigen - Photopolymer-Druckplatten (Klischees) auf Druckzylindern und auf Druckhülsen (Sleeves) einsetzen.

Das erfindungsgemäße Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten vor Druckbeginn zu repositionieren, andererseits aber ist eine feste Verklebung der Platte während des Druckvorganges gewährleistet. Die Druckplatte lässt sich vom Haftklebeband ohne irgendeine Beschädigung entfernen. Ein Abschälen der Trägerschicht der Platte oder die Bildung von unerwünschten Falten in der Platte während des Entfernens treten nicht auf. Auch nach dem Entfernen des Klebebands von dem Druckzylinder verbleiben keine Rückstände.

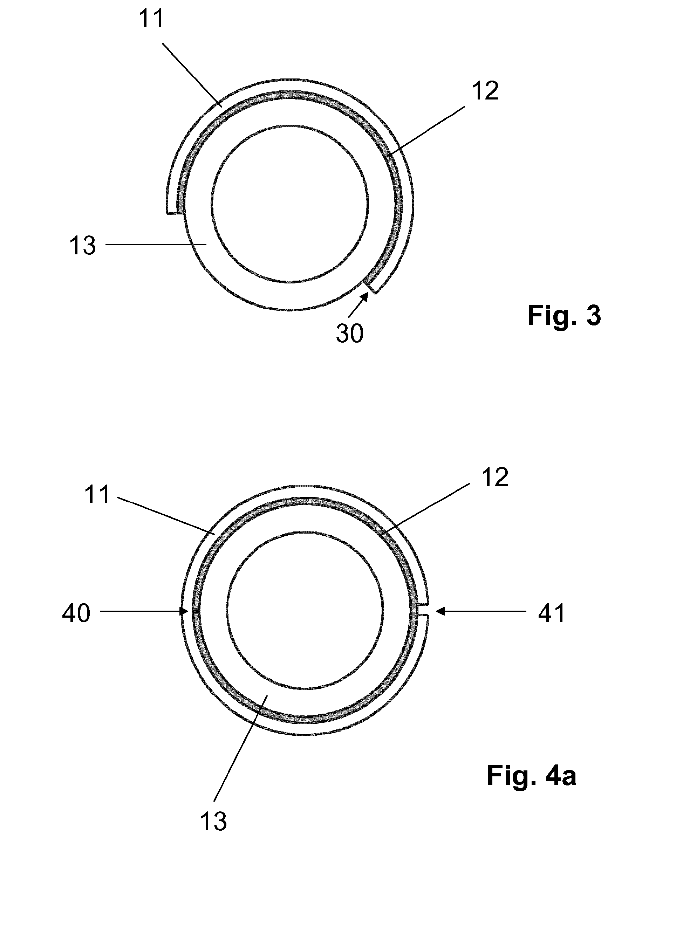

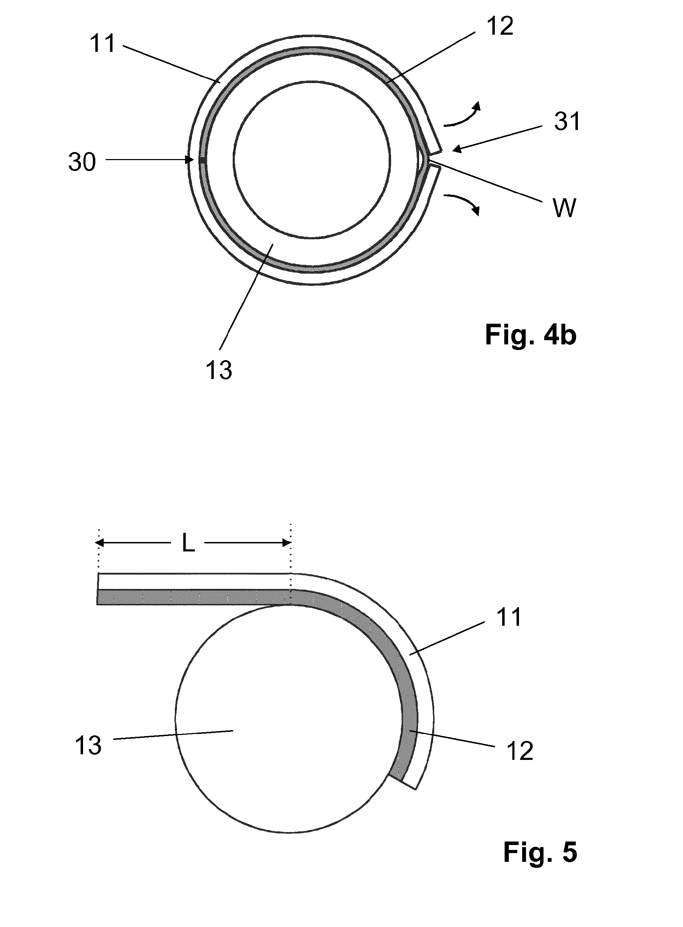

Druckklischees werden auf Druckzylindern und auf Druckhülsen auf unterschiedliche Arten und Weisen verklebt. Gängige Methoden zeigen die Figuren 2, 3 und 4a:
Gemäß Figur 2 ist das Klischee (11) mittels eines Klebebandes (12) auf der Druckhülse (13) oder dem Druckzylinder (13) verklebt, wobei das Klebeband (12) größer als das Klischee (11) ist und daher mit freiliegenden Bereichen (20) unter dem Klischee (11) herausragt. Gemäß der Anwendungsvariante in Figur 3 schließen die Kanten des Verbundes aus Klebeband (12) und Klischee (11) bündig miteinander ab, Kante (30). Gemäß Figur 4a umschließt das Klebeband (12) zum Verkleben des Klischees (11) den gesamten Umfang des Druckzylinders (13) bzw. der Druckhülse (13); wobei die Klebebandkanten an der aneinanderstoßen, Position (40). Um einem Verbundabheben vorzubeugen, wird das Druckklischee (11) derart auf dem Klebeband befestigt, dass dessen Kanten (Position 41) nicht an Stelle des Klebebandstoßes (Position 40) liegen. Diese Anwendungsformen sind hier nur beispielhaft dargestellt, ohne sich dadurch in der erfindungsgemäßen Lehre beschränken zu wollen.

Da das Druckklischee eine gewisse Steifigkeit aufweist, neigt dieses zur Rückstellung in die planare Fläche und daher an seinen Kanten zum Abheben von dem runden Untergrund. Ist die Fixierung des Haftklebebandes auf dem Untergrund, also etwa dem Druckzylinder oder der Druckhülse, nicht groß genug, so ziehen die Kanten des rückstellenden Klischees das Klebeband an dieser Stelle hoch, und eine Welle entsteht (beispielhaft dargestellt in Figur 3b, Welle W). Eine solche Welle kann unter jeder sich abhebenden Klischeekante an der entlang des Umfanges des Untergrundes entlangwandernden Abhebestelle mit wandern, so dass sich das Klebeband im Extremfall einmal fast vollständig vom Druckzylinder bzw. der Druckhülse löst. Aber auch bei nur leicht rückstellenden Klischeekanten mit nicht wandernden Ablösestellen ist die Verklebung an dieser Stelle durch die Welle sehr geschwächt.

Das erfindungsgemäße Klebeband hat sich als sehr vorteilhaft herausgestellt, um eine solche Wellenbildung zu vermeiden.

Die erfindungsgemäßen Klebebänder zeigen ein sehr gutes Montageverhalten. Als Montageverhalten wird im Sinne dieser Schrift insbesondere die Soforthaftung bei dem Verkleben eines Klebebandes mittels der betreffenden Haftklebeschicht auf einem Untergrund verstanden, für ein gutes Montageverhalten soll ein kurzzeitiges Andrücken mit geringer Kraft also demgemäß zu einer guten und verlässlichen Haftung führen.

Die erfindungsgemäßen Haftklebemassen erfüllen die Anforderungen nach einfacher Montage, Repositionierbarkeit, sicherem Halt insbesondere auch auf polaren Untergründen und unter Lösungsmitteleinfluss. Weiterhin zeichnen sie sich durch eine einfache und rückstandsfreie Demontierbarkeit aus, ohne Wellen oder Blasen auszubilden. Sie sind insbesondere für die Anwendung im Flexodruck, wie vorstehend dargestellt, geeignet.

### Experimente

Die untersuchten Haftklebemassen (erfindungsgemäße Beispiele und Referenzbeispiele) wurden wie folgt hergestellt, sofern nicht anders angegeben:

### Acrylathaftklebemassen

Ein für radikalische Polymerisationen konventioneller 2 L-Glasreaktor wurde mit 400 g der Monomermischung entsprechend der Zusammensetzung, wie sie für die einzelnen Beispiele in Tabellen 1 und 2 dargestellt ist, 150 g Aceton und 150 g Siedegrenzbenzin 60/95 befüllt und gut vermischt. Nach 45minütigem Durchleiten von Stickstoffgas unter Rühren wurde der Reaktor mittels eines äußeren Heizbades auf 58 °C (Innentemperatur) hochgeheizt und es wurden 0,16 g 2,2'-Azodi(2-methylbutyronitril) (Vazo® 67) gelöst in 10 g Aceton hinzugegeben. Anschließend wurde das äußere Heizbad auf 75 °C erwärmt und die Reaktion konstant unter Siedekühlung (Außentemperatur 75 °C) durchgeführt. Nach 1 Stunde Reaktionszeit wurden weitere 0,24 g 2,2'Azodi(2-methylbutyronitril) gelöst in 10 g Aceton hinzugegeben. Nach 3 Stunden Gesamtreaktionszeit wurde mit 45 g Aceton und 45 g Siedegrenzbenzin 60/95 verdünnt. Nach 5 Stunden und 30 Minuten Gesamtreaktionszeit wurden 0,60 g Bis-(4-tert-Butylcyclohexanyl)-Peroxydicarbonat gelöst in 10 g Aceton hinzugegeben. Nach 7 Stunden Gesamtreaktionszeit wurden weitere 0,60 g Bis-(4-tert-Butylcyclohexanyl)-Peroxydicarbonat gelöst in 10 g Aceton hinzugegeben. Nach 10 Stunden Gesamtreaktionszeit wurde mit 45 g Aceton und 45 g Siedegrenzbenzin 60/95 verdünnt. Die Reaktion wurde nach 24 Stunden Gesamtreaktionszeit abgebrochen und auf Raumtemperatur abgekühlt.

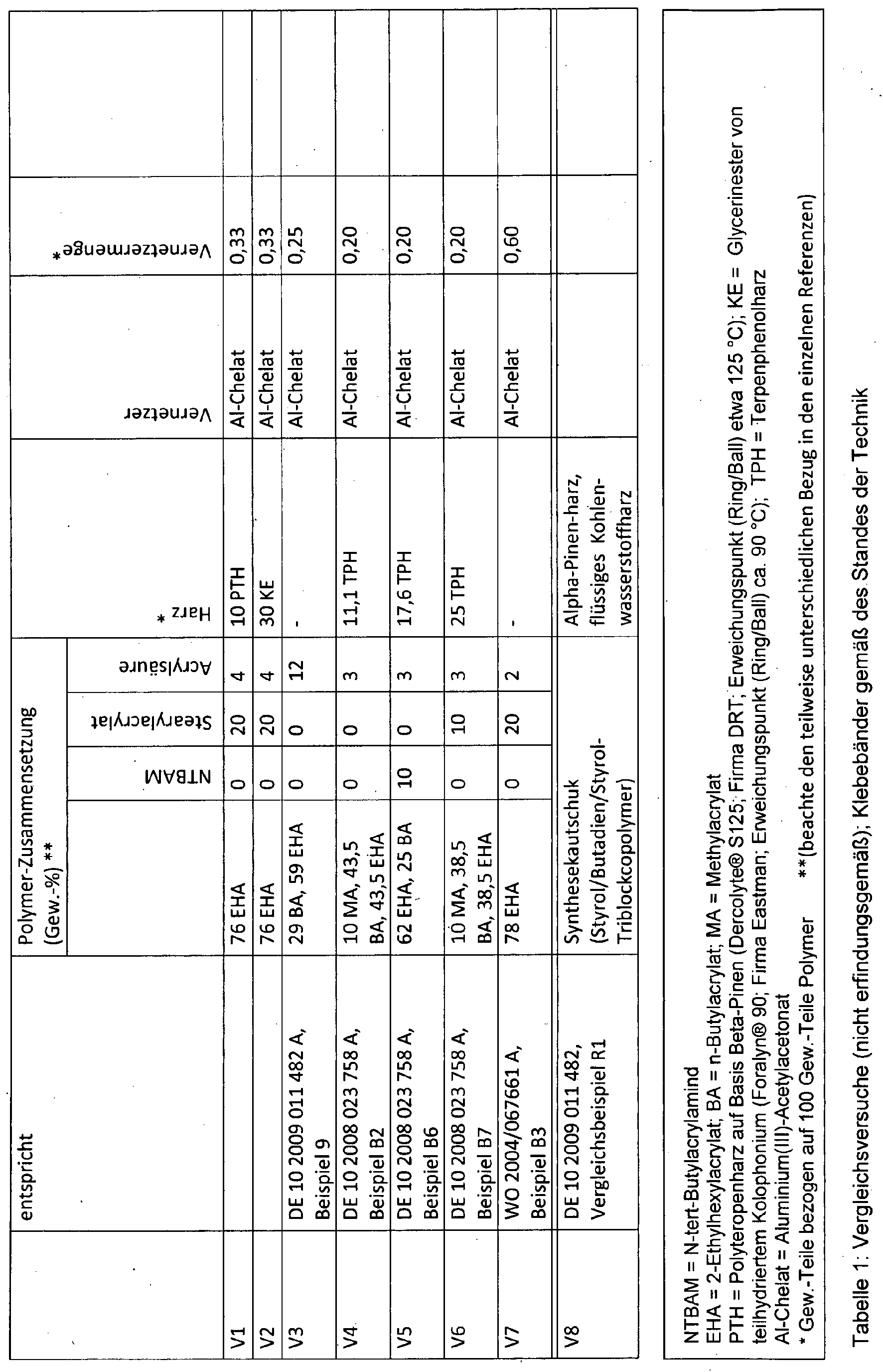

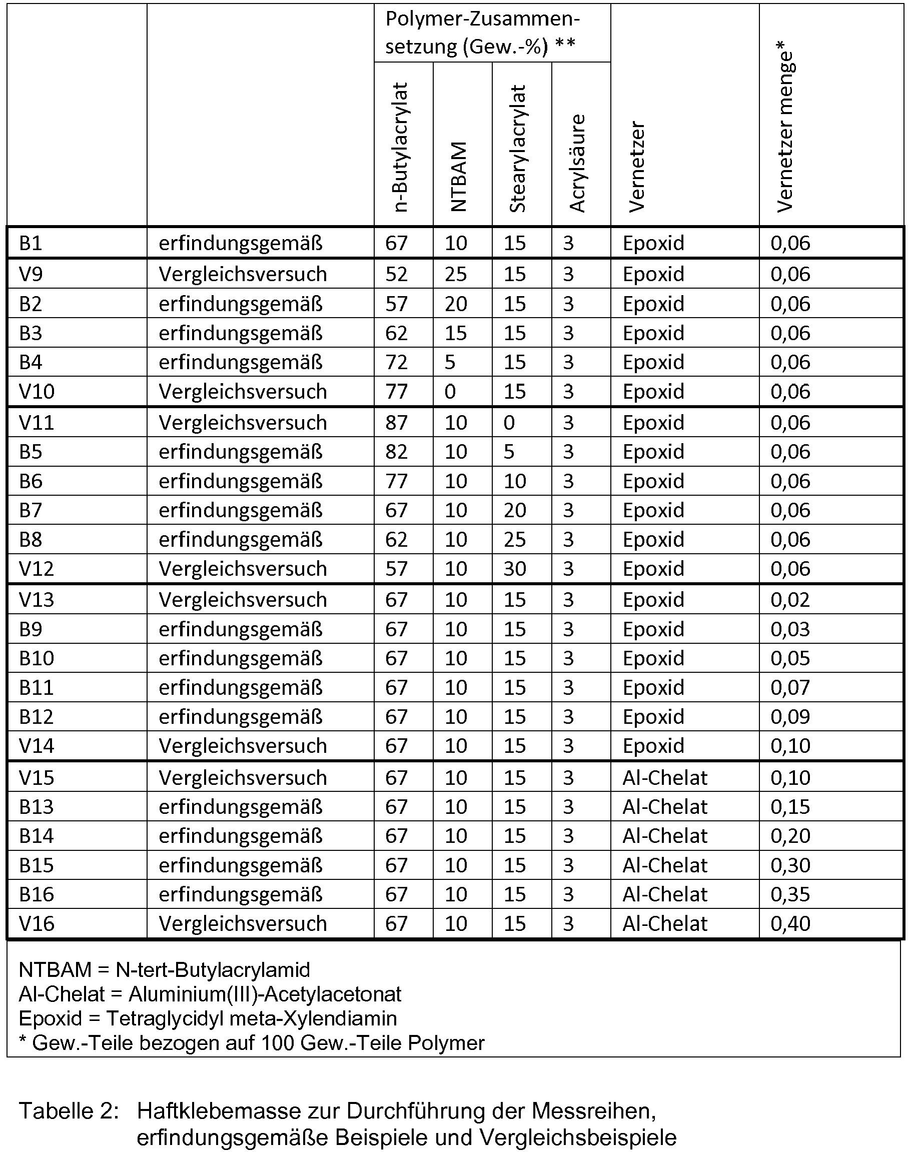

Die wie vorstehend beschrieben erhaltene Polymerlösung A wurde mit einer 1:1-Mischung aus Aceton und Siedegrenzenbenzin 60/95 auf einen Polymeranteil von 30 % verdünnt und die in Tabellen 1 und 2 angegebenen Menge des dort für das jeweilige Beispiel definierten Vernetzers (jeweils eingesetzt als 3%ige Lösung in Aceton) zugegeben, sowie, sofern laut Tabelle erforderlich, mit vorhandenen Harzen abgemischt (Vergleichsbeispiele V1, V2, V4, V5, V6), wodurch man Polymerlösung B erhielt. Die Beispiele für die erfindungsgemäßen Haftklebemassen enthielten keine Harzbeimischungen.

Für die Mikroscherweg-Messung und die T-Peel-Messungen wurde die so erhaltene Polymerlösung B auf eine mittels Trichloressigsäure geätzte 23 µm dicke Polyethylenterephthalat-Folie beschichtet. Nach Trocknung für 15 min bei 120 °C und siebentägiger Konditionierung bei 23 °C und 50 ± 5 % relativer Luftfeuchtigkeit betrug der Masseauftrag 50 g/m² (Klebeband a).

Für die übrigen Untersuchungen wurde die Polymerlösung B auf eine silikonisierte Polyethylenterephthalatfolie beschichtet. Nach Trocknung für 15 min bei 120 °C und siebentägiger Konditionierung bei 23 °C und 50 ± 5 % relativer Luftfeuchtigkeit betrug der Masseauftrag 50 g/m² (Klebeband b).

### Vergleichsbeispiel 8: Synthesekautschuk-Haftklebemasse

20 Gewichtsteile eines Styrol/Butadien/Styrol-Triblockcopolymers des Typs Kraton® D 1118 (ca. 76 Gew.-% Zweiblock, Blockpolystyrolgehalt: 31 Gew.-%, Firma Kraton Polymers), 40 Gewichtsteile eines Styrol/Butadien/Styrol-Triblockcopolymer des Typs Kraton® D 1101 (ca. 18 Gew.-% Zweiblock, Blockpolystyrol-Gehalt: 31 Gew.-%, Firma Kraton Polymers), 30 Gewichtsteile Alpha-Pinenharz (Dercolyte® A 115, Erweichungstemperatur: ca. 115 °C, Firma DRT) und 10 Gewichtsteile eines flüssigen Kohlenwasserstoffharzes (Wingtack® 10, Firma Goodyear) wurden in einer Mischung aus Toluol und Benzin 50:50 gelöst, so dass ein Feststoffgehalt von 40 % entsteht. Als Alterungsschutzmittel wurden 0,5 Teile eines sterisch gehinderten Phenols (Irganox® 1010; Firma Ciba Additive) und 0,5 Teile eines kommerzieller UV-Absorbers (Tinuvin® P, Ciba Additive) zugesetzt.

Die Weiterverarbeitung erfolgte entsprechend der Polymerlösung B.

### Herstellung eines Haftklebeverbundes V

Ein doppelseitiges Klebeband c aus einer 23 µm dicke Polyethylenterephthalatfolie (PET), einer 50 µm dicken Schicht einer Synthesekautschuk-Haftklebemasse (gemäß Vergleichsbeispiel 8) auf einer Seite der PET-Folie und einer 20 µm dicken Schicht einer Kaschierklebemasse auf der anderen Seite der PET-Folie, dessen Synthesekautschuk-Haftklebemassenschicht mit einem Abdeckmaterial abgedeckt war, wurde mit der Kaschierklebemassenschicht auf einen beidseitig coronabehandelten (Dosis 100 Wmin/m²; Prozessgas Luft, Bahngeschwindigkeit 30 m/min, Abstand der Elektroden zur zu behandelnden Schaumoberfläche 2,0 mm) Schaumträger (PE-EVA-Schaum mit einer Dicke von 500 µm und einem Raumgewicht von 270 kg/m³) aufgebracht.

Das Klebeband b wurde auf seiner freien Klebemassenseite ebenfalls coronabehandelt (Dosis 50 Wmin/m²; Prozessgas Luft, Bahngeschwindigkeit 30 m/min, Abstand der Elektroden zur zu behandelnden Haftklebemassenoberfläche 1,3 mm). Unmittelbar nach der Coronavorbehandlung von Schaumträger und Haftklebemasse wurde die Haftklebemasse des Klebebandes b auf die freiliegende Seite des Schaumträgers kaschiert und der silikonisierte Träger von der anderen Seite der erfindungsgemäßen Haftklebemasse abgezogen.

Das so hergestellte mehrschichtige Klebeband wird als Haftklebeverbund V bezeichnet.

### Beurteilungen der Anwendungseignung

Die Bewertungsmaßstäbe der folgenden Testmethoden wurden jeweils so gewählt, dass ein "o" ein für die Verwendung im Flexodruck als befriedigend zu beurteilendes Ergebnis darstellt, während "-"-Werte (und insbesondere "--"-Werte) erfahrungsgemäß zu erheblichen Problemen im Betrieb führen, die nicht mehr tolerierbar sind.

"+"-und "++"-Werte charakterisieren Muster von Klebebändern, die im Betrieb kaum bzw. so gut wie keine Probleme in Bezug auf die getestete Eigenschaft hervorrufen.

### Beurteilung Montageverhalten (Test 1)

Aus dem zu untersuchenden doppelseitigen Haftklebeverbund V wurden 230 mm x 140 mm große Haftklebeverbund-Muster geschnitten. Solche Haftklebeverbund-Muster wurden mit der offen liegenden erfindungsgemäßen Haftklebemasse für eine erste Untersuchung auf eine Druckhülse (Rotec bluelight Sleeve; Polyurethan-Oberfläche 75 Shore D), für eine zweite Untersuchung auf einen handelsüblichen Stahlzylinder, jeweils mit einem Durchmesser von 110 mm, so geklebt, dass die kürzeren Kanten der Haftklebeverbund-Muster in Längsrichtung der Hülse bzw. des Zylinders ausgerichtet waren und die längeren Kanten dem Umfang folgend verlaufen. Dann wurde das Abdeckmaterial auf der Synthesekautschuk-Haftklebemassenschicht abgezogen. Auf die so freigelegte Synthesekautschuk-Schicht des Haftklebeverbund-Musters wurde eine vollflächig belichtete Druckplatte der Fa. DuPont Cyrel HOS® mit den Abmessungen Länge 230 mm x Breite 140 mm x Dicke 2,54 mm derart verklebt, dass jede der Kanten deckungsgleich auf dem darunter liegenden Haftklebeverbund auflag.

Die Aufbringung des Klischees geschah, indem eine der kürzeren Kanten des Klischees (Querkante) bündig zu einer der kürzeren Kanten des Haftklebeverbundes aufgebracht wurde (vgl. Fig. 3). Dann wurde das Klischee von dieser Kante ausgehend mit einem Stahlanrollgewicht (Breite größer als die des Klischees, Gewicht 7 kg) angerollt. Die Anrollbewegung fand in Längsrichtung des Druckzylinders bzw. der Druckhülse und lotrecht statt und wurde kontinuierlich von jeweils einer Längskante des Klischees zur gegenüberliegenden Längskante des Klischees und wieder zurück ausgeführt. Das Ganze wurde zweimal wiederholt. Die Anrollgeschwindigkeit betrug dabei in Querrichtung 10 m/min.

Nachfolgend wurde das Klischee mit der Hand wieder vom Haftklebeverbund abgezogen und beobachtet, ob der Haftklebeverbund zuverlässig auf dem Untergrund (Zylinder, Hülse) kleben blieb.

Der Test wurde bei einer Temperatur von 23 °C und einer relativen Luftfeuchtigkeit von 50 ± 5 % durchgeführt.

### Bewertungsschema:

| Charakterisierung | Bewertung |
|---|---|
| Haftklebeverbund haftet beim Montieren sehr gut am Untergrund; bei Repositionierung des Klischees hebt der Verbund nicht von Druckzylinder bzw. -hülse ab | + |
| Haftklebeverbund haftet beim Montieren sehr gut am Untergrund; bei Repositionierung des Klischees hebt der Verbund von Druckzylinder bzw. -hülse ab | o |
| Haftklebeverbund haftet beim Montieren schlecht oder nicht am Untergrund | - |

Die Beurteilung lässt Rückschlüsse darüber zu, ob der Haftklebeverbund bei der Montage durch einfaches Andrücken zuverlässig auf dem jeweiligen Untergrund haftet. Weiterhin wird festgestellt, ob der Haftklebeverbund zuverlässig, ohne Blasenbildung und/oder ohne Wellenbildung auf dem jeweiligen Untergrund haften bleibt, wenn das Druckklischee vom Haftklebeverbund wieder abgezogen wird. Beide Anforderungen werden regelmäßig von den Abnehmern in der Druckindustrie gefordert, da diese einerseits eine sichere Fixierung des Klischees auf Hülse bzw. Zylinder erwarten, andererseits das Klischee zur passgenauen Fixierung aber häufig noch justieren müssen, wobei das zur Verklebung verwendete Klebeband nicht beschädigt werden soll und sich nicht ablösen darf.

### Beurteilung Verbundabheben (Test 2)

Die Montage von Haftklebeverbund und Klischee erfolgte wie zur Beurteilung des Montageverhaltens, vergleiche Angabe oben, mit der entsprechenden Anpresskraft, die erforderlich war, um das Klischee vollflächig und ohne Kantenabheben zu montieren. Der Druckzylinder bzw. die Druckhülse wurde so ausgerichtet, dass sich beide kurzen Kanten des verklebten Klischees auf einer Höhe oberhalb der Drehachse des Zylinders bzw. der Hülse befanden (offenliegender Bereich nach oben ausgerichtet). Die Muster wurden dann in einem Klima von 23 °C und 50 ± 5 % relativer Luftfeuchtigkeit für 3 Tage (72 Stunden) gelagert.

Aufgrund des Rückstellverhaltens des Klischees neigt dieses - oder auch ein Verbund umfassend dieses Klischee - zum Kantenabheben. Die Synthesekautschuk-Haftklebemasse auf Seiten des Klischees (Masse gemäß Vergleichsbeispiel 8, siehe oben) ist dabei derart gewählt, dass ein Kantenabheben des Klischees vom Haftklebeverbund nicht erfolgt. Je nach Beständigkeit der Verklebung der erfindungsgemäßen Haftklebemasse auf dem jeweiligen Untergrund (Polyurethan, Stahl) wird dabei der darunterliegende Haftklebeverbund mit abgehoben (vgl. Fig. 5; hier vereinfachend nur für eine Kante dargestellt; 11 = Klischee; 12 = Haftklebeverbund; 13 = Hülse bzw. Zylinder). Zur Beurteilung dieses Verhaltens wird die Länge L des abgehobenen Haftklebeverbundes bis zur ersten verbliebenen Kontaktstelle mit dem Untergrund bestimmt (Mittelwert jeweils aus der Auswertung beider Kanten und drei Messdurchgängen).

**Beurteilungsschema**

| | |
|---|---|
| L ≤ 10 mm | ++ |
| 10 mm < L ≤ 20 mm | + |
| 20 mm < L ≤ 30 mm | ○ |
| 30 mm < L ≤ 40 mm | - |
| L > 40 mm | -- |

Mittels der vorstehenden Beurteilungsmethode lassen sich Aussagen darüber treffen, ob der beurteilte Haftklebeverbund dauerhaft - also auch bei längerer Lagerung - auf dem jeweiligen Untergrund haften bleibt, oder ob es sich von diesem signifikant ablöst. Da es in der Druckindustrie häufig vorkommt, dass Druckklischees auf Hülsen bzw. Zylindern verklebt werden und diese so vorbereiteten Hülsen bzw. Zylinder nach dem ersten Druckvorgang für spätere weitere Druckvorgänge verwendet werden sollen, wird häufig gefordert, dass die eingesetzten Klebebänder auch über längere Zeiträume - bei Einlagerung der so vorbereiteten Druckhülsen bzw. Zylinder - eine zuverlässige Verklebung der Klischees gewährleisten sollen.

Die Erfahrung hat gelehrt, dass vom Anmelder angebotene Klebebänder zur Verklebung flexibler Druckplatten kaum zu Kundenreklamationen in Bezug auf ein Verbundabheben unter Realbedingungen führen, wenn sie im vorstehenden Test zumindest eine o-Bewertung gemäß der vorstehenden Skala erzielen, während Negativ-Bewertungen (-, --) auf dieser Skala regelmäßig zu Beanstandungen der Produkte führen. Zu Produkten, die gute Bewertungen (+, ++) erzielen, wurden bisher keine signifikanten Beanstandungen wegen des Verbundabhebens unter Realbedingungen erhalten.

### Beurteilung Wellenbildung bei Demontage des Klischees (Test 3)

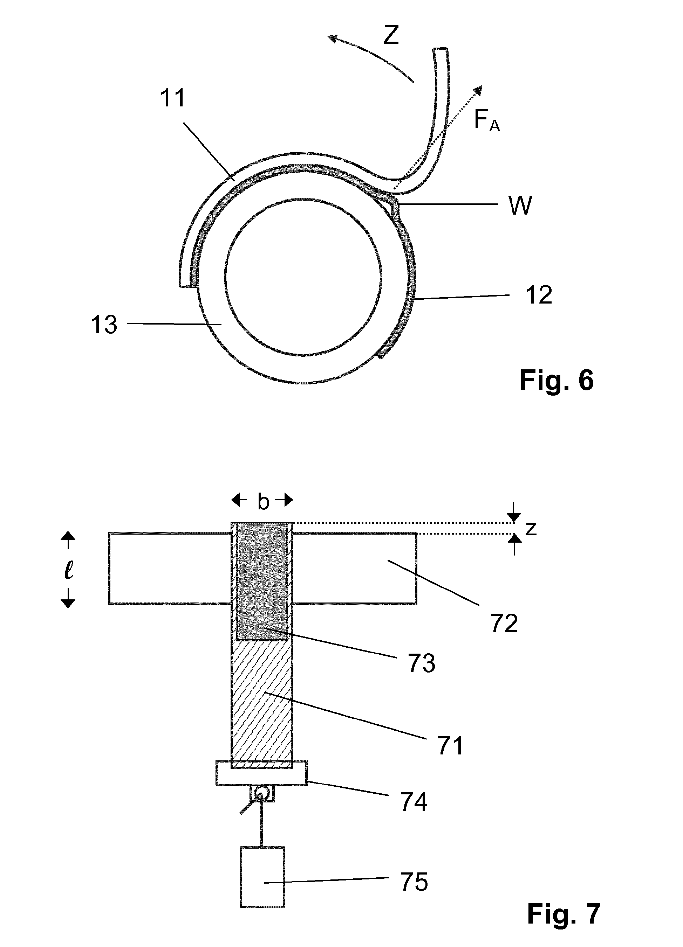

Die Montage der Prüfmuster erfolgte wie zur Beurteilung des Montageverhaltens, vergleiche Angabe oben, mit der entsprechenden Anpresskraft, die erforderlich war, um das Klischee vollflächig und ohne Kantenabheben zu montieren. Nach drei Tagen Lagerung bei 23 °C und 50 ± 5 % relative Luftfeuchtigkeit wurde das Klischee mit einer Geschwindigkeit von etwa 300 mm/min in einem Winkel von etwa 90 ° mit der Hand vom Haftklebeverbund abgezogen (vgl. hierzu Figur 6).

Dabei wurde beobachtet, ob sich beim Abziehen des Klischees (11) in dem auf der Druckhülse bzw. dem Druckzylinder (13) zurückbleibenden Haftklebeverbund (12) an der Abzugsstelle eine Welle (W) ausbildete. Eine derartige Welle, sofern diese entstand, wanderte regelmäßig beim weiteren Abziehen mit der Abzugsstelle durch den Haftklebeverbund.

Je besser die Haftung der erfindungsgemäßen Haftklebemasse auf dem Untergrund ist, desto geringer ist die Neigung zur Ausbildung einer Welle. Zur Beurteilung der Ausprägung derartiger Wellen wurde deren Höhe im mm bestimmt (angegeben der Mittelwert aus sechs identisch hergestellten Klebebandmustern).

**Beurteilungsschema (Wellenhöhe h)**

| | |
|---|---|
| Keine Welle | ++ |
| h ≤ 0,5 mm | + |
| 0,5 mm < h ≤ 1,0 mm | ○ |
| 1,0 mm < h ≤ 1,5 mm | - |
| h > 1,5 mm | - |

### Beurteilung Demontageverhalten des Haftklebeverbundes (Tests 4 und 5)

Es wird gefordert, dass für die Fixierung von Klischees eingesetzte Klebebänder bei der Demontage des Klischees sicher kleben bleiben sollen (siehe oben), aber dennoch danach selbst ohne wesentlichen Kraftaufwand rückstandsfrei entfernbar sein sollen.

Daher wurde anschließend an die Beurteilung der Wellenbildung das Demontageverhalten des Haftklebeverbundes bewertet, indem dieser bei jeweils identisch hergestellten Prüfmustern mit der Hand in einer ersten Versuchsreihe (drei Versuche) ruckartig (Test 4) und in einer zweiten Versuchsreihe (ebenfalls drei Versuche) in einem Winkel von etwa 90 ° mit einer Geschwindigkeit von etwa 300 mm/min (Test 5) von dem Druckzylinder bzw. der Druckhülse abgezogen wurde. Beurteilt wurde jeweils die subjektive dabei aufzuwendende Kraft. Das nachfolgende Bewertungsschema wurde derart erstellt, dass ein mit "o" gekennzeichneter Kraftaufwand von Fachleuten als akzeptabel für die Anwendung angesehen wurde. Negative Bewertungen ("-") wurden als für die tägliche Anwendung nicht mehr akzeptabel erachtet.

**Bewertungsschema**

| | |
|---|---|
| wenig Kraftaufwand | + |
| mäßiger Kraftaufwand | o |
| hoher Kraftaufwand | - |

### Beurteilung der Rückstände auf Zylinder bzw. Hülse (Test 6)

Nach der Demontage des Haftklebeverbundes von Zylinder bzw. Hülse wurde beurteilt, ob von dem Haftklebeverbund (insbesondere von der Schicht der erfindungsgemäßen Haftklebemasse) Rückstände verblieben waren.

**Bewertungsschema (angegeben jeweils die Fläche f der Rückstände auf dem jeweiligen Untergrund als Bruchteil (in Prozent) der ursprünglich verklebten Klebebandfläche)**

| | |
|---|---|
| f ≤ 1 % | ++ |
| 1 % < f ≤ 2 % | + |
| 2 % < f ≤ 3 % | o |
| 3 % < f ≤ 4 % | - |
| F > 4 % | -- |

### Beurteilung Lösungsmittelbeständigkeit (Test 7)

Es wurde ein Haftklebeverbund V2 entsprechend der Beschreibung zur Herstellung des Haftklebeverbundes V hergestellt, wobei jedoch statt der für den Haftklebeverbund V beschriebenen Synthesekautschukmasse auf Seiten der Klischeeverklebung eine Acrylathaftklebemasse (gemäß Vergleichsversuch 3) eingesetzt wurde (Schichtdicke dieser Acrylathaftklebemassenschicht 50 µm). Aus dem zu untersuchenden doppelseitigen Haftklebeverbund V2 wurden wieder 230 mm x 140 mm große Haftklebeverbund-Muster geschnitten.

Die Montage der Prüfmuster erfolgte wie zur Beurteilung des Montageverhaltens, siehe Angabe oben, mit der entsprechenden Anpresskraft, die erforderlich war, um das Klischee vollflächig und ohne Kantenabheben zu montieren. Unmittelbar nach der Montage wurde der Druckzylinder bzw. die Hülse so ausgerichtet, dass sich beide kurzen Kanten des verklebten Klischees auf einer Höhe oberhalb der Drehachse des Zylinders bzw. der Hülse befanden (offenliegender Bereich nach oben ausgerichtet).

Mit einer Sprühflasche wurde ein Lösungsmittelgemisch (1/8 Ethylacetat / 1/8 n-Propanol / 6/8 Ethanol) 1 Minute lang auf eine der Kanten appliziert, so dass diese ständig unter Lösungsmitteleinfluss stand. Dabei wurde gerade so viel Lösungsmittel appliziert, dass die betreffende Kante dauerhaft mit Lösungsmittel benetzt war (Testbedingungen: 23 °C, 50 ± 5 % relative Luftfeuchtigkeit; gesamt applizierte Lösemittelmenge in einer Minute 3,5 mL)).

Der Zylinder bzw. die Hülse wurde nach Ablauf der Benetzungsdauer aufrecht hingestellt, so dass überschüssiges Lösungsmittel ablaufen konnte.

Es wurde beobachtet, ob sich die benetzte Kante des Laminats aus Klischee und Haftklebeverbund von dem jeweiligen Untergrund (Zylinder bzw. Hülse) abgehoben hatte. Ein Maß für das Kantenabheben war dabei die 60 min nach Ablauf der Benetzungsdauer in Tangentialrichtung gemessene Länge L des nicht mehr verklebten Stücks des Haftklebeverbundes (also die Länge des abgehobenen Stücks), gemessen von dem freiliegenden Ende bis zu der ersten noch verklebten Stelle (vgl. ebenfalls Fig. 5: 11 = Druckplatte (Klischee), 12 = Haftklebeverbund, 13 = Druckzylinder, L = Länge des abgehobenen Stücks des Haftklebeverbundes).

**Bewertungsschema:**

| Kantenabheben nach Lösungsmitteleinfluss | Bewertung |
|---|---|
| L ≤ 50 mm | ++ |
| 50 mm < L ≤ 80 mm | + |
| 80 mm < L ≤ 110 mm | o |
| 110 mm < L ≤ 140 mm | - |
| L > 140 mm | -- |

Die Erfahrung hat gelehrt, dass vom Anmelder angebotene Klebebänder zur Verklebung flexibler Druckplatten kaum zu Kundenreklamationen in Bezug auf ein Kantenabheben unter Realbedingungen führen, wenn sie im vorstehenden Test (also unter drastischem Lösungsmitteleinfluss) zumindest eine o-Bewertung gemäß der vorstehenden Skala erzielen, während Negativ-Bewertungen (-, --) auf dieser Skala regelmäßig zu Beanstandungen der Produkte führen. Zu Produkten, die gute Bewertungen (+, ++) erzielen, wurden bisher keine signifikanten Beanstandungen wegen des Kantenabhebens unter Lösemitteleinfluss unter Realbedingungen erhalten.

### Mikroscherweg-Messung / Vernetzungszustand (Test 8)

Die Messanordnung ist in Fig. 7 illustriert.

Aus dem Klebeband a wurden 10 mm x 50 mm große Flächenstücke geschnitten und das so erhaltene Klebebandmuster (71) derart auf eine polierte, temperierbare, mit Aceton gereinigte 13 mm breite Stahl-Prüfplatte (72) verklebt, dass die Längsrichtung des Klebebandmusters in Querrichtung der Stahlplatte ausgerichtet war, die Verklebungsfläche die Dimensionen ℓ x b = 13 mm x 10 mm betrug und das Klebeband die Stahlplatte auf einer Seite um ein Stück der Länge z = 2 mm überragte. Zur Fixierung wurde das Klebeband anschließend mit einer 2 kg-Stahlrolle und einer Geschwindigkeit von 10 m/min sechsmal überrollt. Auf der der Stahlplatte (72) abgewandten Seite des Klebebandes (71) wurde das Klebeband (71) bündig mit der die Stahlplatte um das Stück der Länge z überragenden Kante mit einem stabilen Klebestreifen (73) (Dimensionen 4 mm x 25 mm; Träger 190 µm dicke PET-Folie) verstärkt, der als Auflage für einen Wegmessfühler (nicht dargestellt) diente.

Die so vorbereitete Anordnung wurde derart senkrecht aufgehängt, dass das die Stahlplatte (72) überragende Stück der Länge z des Klebebandmusters (71) nach oben zeigte. Die Stahl-Prüfplatte (72) mit der verklebten Probe (71) wurde auf 40 °C temperiert und das zu vermessende Klebebandmuster (71) am unteren Ende mittels einer Klammer (74) zum Zeitpunkt t₀ = 0 mit einem Gewicht (75) von 100 g belastet. Gemessen mittels des Wegmessfühlers wurde die Deformation der Probe unter Scherung über einen Zeitraum von 15 Minuten (beginnend bei t₀) bei einer Temperatur von 40 °C und einer relativen Luftfeuchtigkeit von 50 ± 5 %.

Angegeben wird die Scherstrecke nach 15 min (Maximalwert; während der Messung nach unten zurückgelegter Weg der oberen Kante der Probe) als Ergebnis in µm. Der so gemessene Scherweg ist ein quantitatives Maß für den Vernetzungszustand der vermessenen Probe.

### Beurteilung Klebkräfte im T-Peel-Test (Test 9)

### Weitere Klebebandmuster wurden jeweils wie folgt hergestellt:

Klebebänder a basierend auf eine Monomermischung aus 67 Gew.-% Butylacrylat, 10 Gew.-% N-tert-Butylacrylamid, 15 Gew.-% Stearylacrylat und 3 Gew.-% Acrylsäure, Vernetzer 0,06 Gew.-Teile Tetraglycidyl meta-Xylendiamin auf 100 Gew.-Teile Polymer, wurden wie oben angegeben hergestellt.

Doppelseitige Klebebänder c aus einer 23 µm dicke Polyethylenterephthalatfolie (PET), einer 50 µm dicken Schicht einer Synthesekautschuk-Haftklebemasse (gemäß Vergleichsbeispiel 8) auf einer Seite der PET-Folie und einer 20 µm dicken Schicht einer Kaschierklebemasse auf der anderen Seite der PET-Folie, deren Synthesekautschuk-Haftklebemassenschicht mit einem Abdeckmaterial aus geätzter 23 µm dicker PET-Folie abgedeckt war, wurden mit der Kaschierklebemassenschicht jeweils auf einen beidseitig coronavorbehandelten (Dosis 100 Wmin/m²; Prozessgas Luft, Bahngeschwindigkeit 30 m/min, Abstand der Elektroden zur zu behandelnden Schaumoberfläche 2,0 mm) Schaumträger (PE-EVA-Schaum mit einer Dicke von 500 µm und einem Raumgewicht von 270 kg/m³) aufgebracht und so ein Mehrschichtsystem erhalten. Die Klebebänder a wurden auf der freien Klebemassenseite zum Teil nicht, zum Teil mit unterschiedlichen Intensitäten und unterschiedlichen Prozessgasen coronavorbehandelt (zu Dosen und Prozessgasen siehe Tabelle 8; Bahngeschwindigkeit jeweils 30 m/min, Abstand der Elektroden zur zu behandelnden Haftklebemassenoberfläche jeweils 1,3 mm).

Danach wurde die Haftklebemasse des Klebebandes b mit der freiliegenden Klebemassenseite (erfindungsgemäße, ggf. coronavorbehandelte Klebemassenoberfläche) auf die freiliegende Seite des Schaumträgers jeweils eines der zuvor hergestellten Mehrschichtsysteme kaschiert, wobei darauf geachtet wurde, dass zwischen der Coronavorbehandlung beider zu kaschierenden Oberflächen und der Kaschierung eine Zeitdauer von 5 min nicht überschritten wurde.

Aus den so erhaltenen Produkten wurden Prüfmuster von 200 mm Länge und 20 mm Breite zugeschnitten. Danach erfolgte eine Lagerung von sieben Tagen bei 23 °C und 50 % +/- 5 % rel. Luftfeuchte.

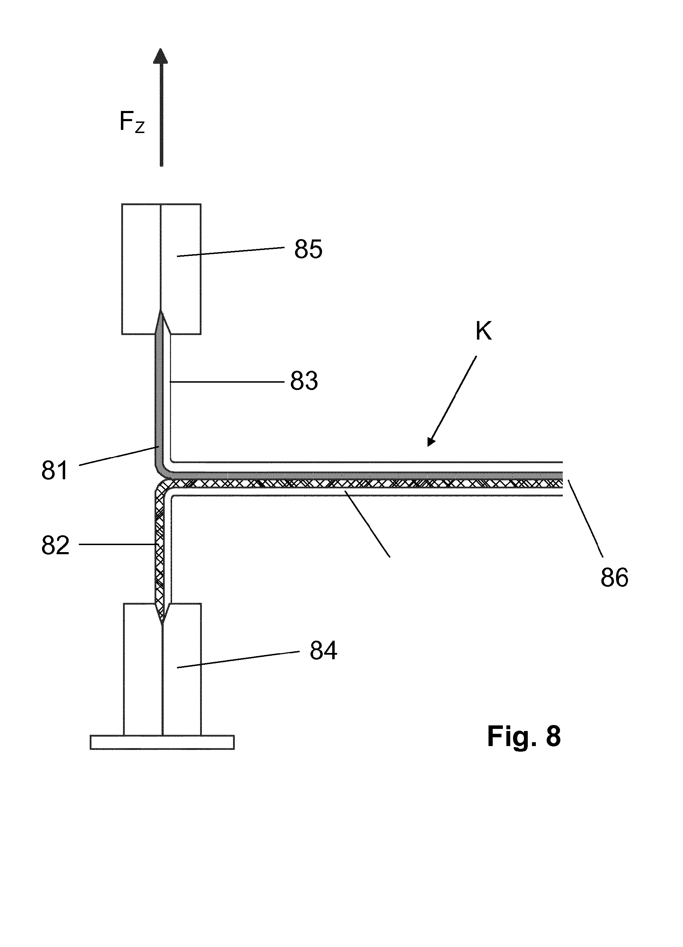

Zur Messung der Klebkräfte - zum Messprinzip siehe Fig. 8 - der erfindungsgemäßen Haftklebemasse (81) auf dem Schaumträger (82) in Abhängigkeit von der Coronavorbehandlung der Klebemasse wurde die Haftklebemassenschicht (81) zusammen mit der darauf befindlichen PET-Folie (83) an einem Ende der Prüfmuster (K) ein kleines Stückchen von der Schaumschicht (82) gelöst und das Prüfmuster (K) derart in eine Zwick-Zugprüfmaschine eingespannt, dass die Geometrie von der Seite betrachtet einem "T" entsprach: Das Prüfmusterende, von dem die Klebemasse ein kleines Stück abgelöst war, also das verbleibende Mehrschichtsystem aus Schaum (82) und Schichtfolge Kaschierklebemasse/PET-Folie/Klebemassenschicht/Abdeckmaterial (84), wurde in eine feste Haltevorrichtung (85) eingespannt, während das abgelöste Ende aus erfindungsgemäßer Klebemasse (81) und PET-Folie (83) in eine bewegliche Einspannvorrichtung (86) eingespannt wurde. Das andere Ende (87) des Prüfmusters (K) wurde derart festgehalten, dass bei Zug der Einspannvorrichtung (86) in Pfeilrichtung der Verbund zwischen erfindungsgemäßer Klebemasse (81) und Schaum (82) weiter getrennt wurde und die T-Form des Prüfmusters (K) dabei erhalten blieb. Die Zugkraft (F), die zum Abziehen der erfindungsgemäßen Klebemasse (81) vom Schaumträger (82) aufgewendet werden musste, entspricht der Trennkraft.

Die Bestimmung der Klebkraft im T-Peel erfolgt bei einem Prüfklima von 23 °C Temperatur und 50 % +/- 5 % rel. Luftfeuchte für zwei unterschiedliche Abzugsgeschwindigkeiten. Die Messergebnisse sind in N/cm angegeben und sind gemittelt aus drei Messungen.

### Ergebnisse

### Ergebnisse der Variation der Haftklebemassenzusammensetzung

Zur Charakterisierung der Eigenschaften von erfindungsgemäßen Beispielen wurden Untersuchungsreihen durchgeführt, bei denen unabhängig voneinander der Anteil an N-Alkyl-substituiertem Acrylamid (hier exemplarisch N-tert-Butylacrylamid) und die Menge an Acrylsäureestern bzw. Methacrylsäureester mit einem linearen Alkylrest mit mindestens 12 C-Atomen im Alkoholrest (hier exemplarisch Stearylacrylat) variiert wurden. Die Variationen umfassen eine als hervorragend erkannte Haftklebemasse (Beispiel B1), die somit in alle Messreihen integriert werden kann, und umfassen jeweils nicht erfindungsgemäße Ausführungen in den Grenzbereichen (außerhalb der beanspruchten Bereiche) als Vergleichsversuche.

Die Ergebnisse zeigen, dass durch Wahl der geeigneten Monomerzusammensetzung im beanspruchten Bereich eine Haftklebemasse erhalten wurde, die die Anforderungen für eine Anwendung im Flexodruck, insbesondere auf Seiten der Druckhülse bzw. des Druckzylinders, erfüllt (erfindungsgemäße Beispiele; keine negativen Beurteilungsergebnisse). Wählt man die Komponenten der Monomerzusammensetzung jeweils im bevorzugten Bereich, so werden nur gute bzw. sehr gute Beurteilungsergebnisse beobachtet (Beispiele B1, B3, B6, B7). Dementgegen zeigte keine der Klebemassen aus dem Stand der Technik ein Profil, das allen Anforderungen genügt.

Dabei gewährleisteten die erfindungsgemäßen Haftklebemassen gute Resultate sowohl auf der Druckhülse, also einer Polyurethan-Oberfläche, als auch auf dem Druckzylinder, also einer Stahloberfläche.

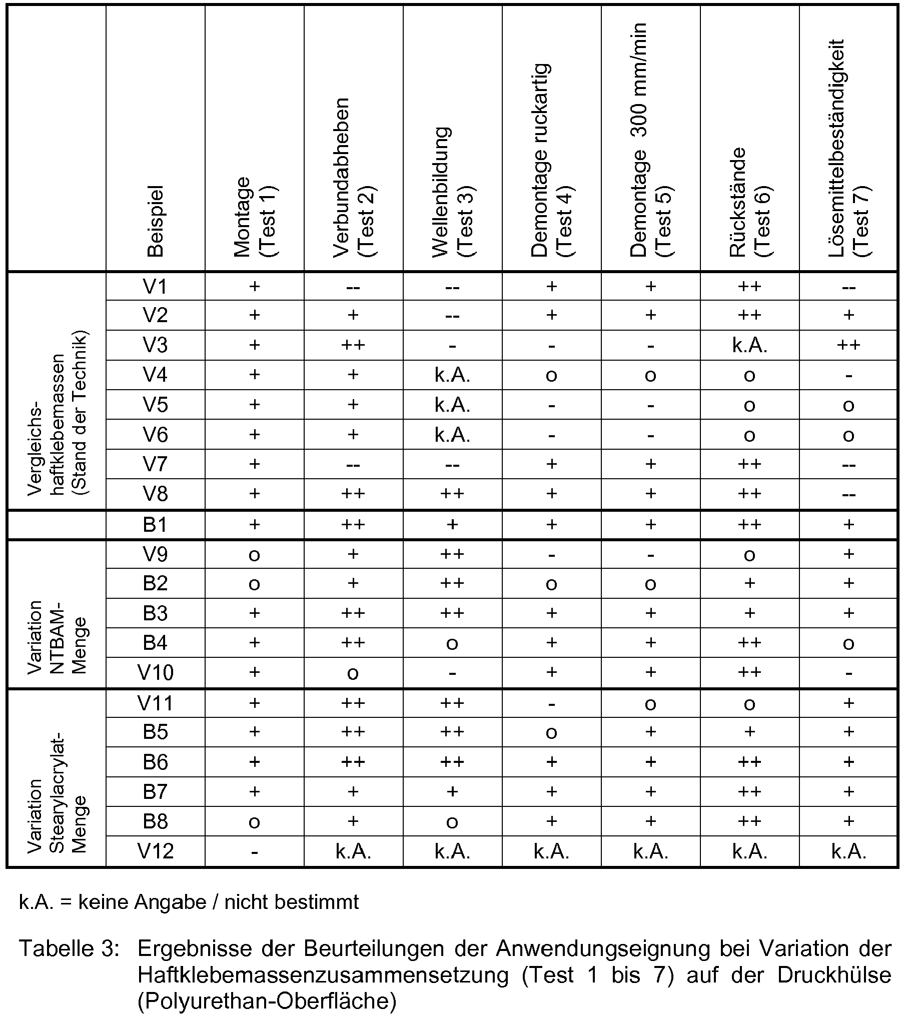

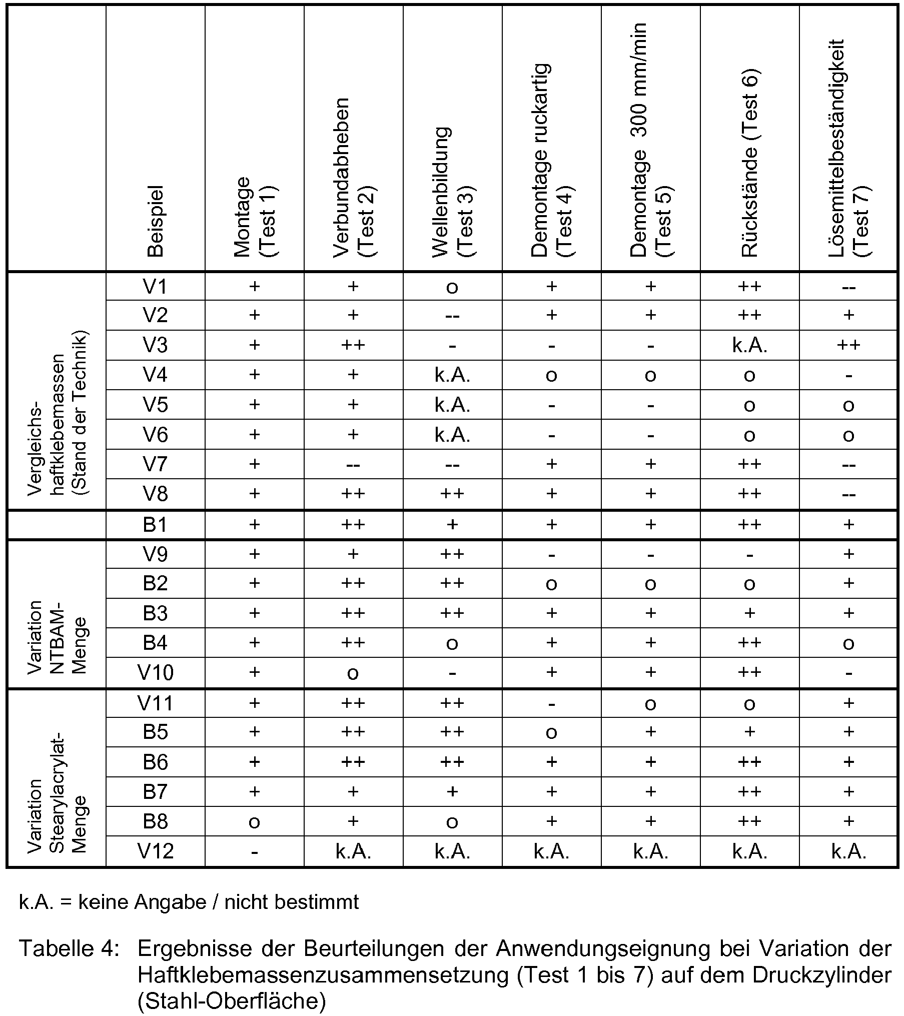

### Ergebnisse der Vernetzervariation und der Mikroscherwegmessungen

Anhand der Messreihen lässt sich erkennen, dass der Vernetzungszustand der gut geeigneten Versuchsbeispiele einem Mikroscherweg gemäß der oben definierten Messmethode entspricht, der im Bereich zwischen 100 µm und 300 µm liegt (alle erfindungsgemäßen Beispiele), während die Beispiele mit den besten Ergebnissen einen Mikroscherweg im Bereich von 125 bis 250 µm aufweisen (Beispiele B1, B10, B11, B14, B15).

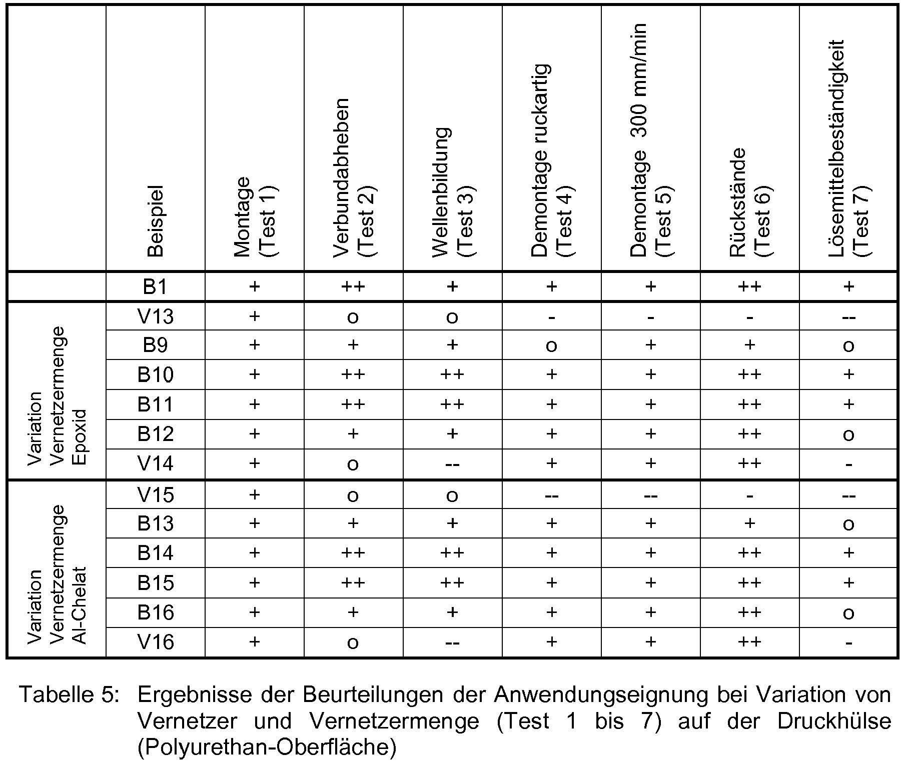

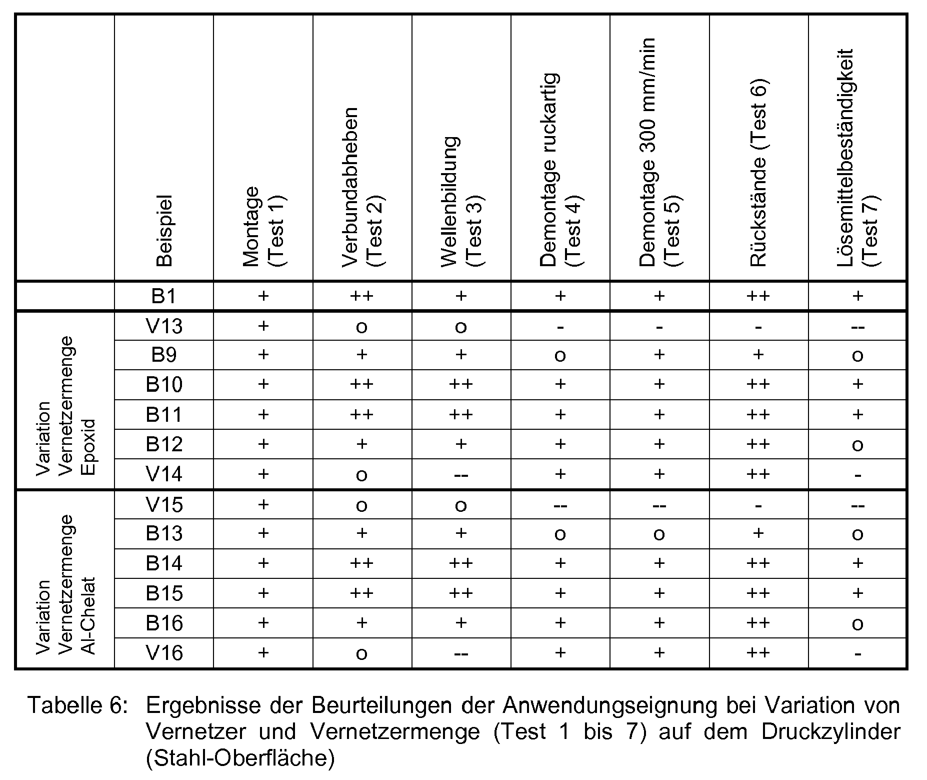

**Tabelle 7: Ergebnisse aus den Mikroscherweg-Messungen (Test 8)**

| Beispiel | Mikroscherweg [µm] |
|---|---|
| B1 | 182 |
| V13 | 606 |
| B9 | 290 |
| B10 | 242 |
| B11 | 131 |
| B12 | 105 |
| V14 | 66 |
| V15 | 320 |
| B13 | 277 |
| B14 | 224 |
| B15 | 155 |
| B16 | 101 |
| V16 | 41 |

### Ergebnisse der Versuche zur Corona-Behandlung

Durch die Messungen im T-Peel-Test wurde gezeigt, dass durch die Coronavorbehandlung nicht nur der Schaumschicht, sondern auch der erfindungsgemäßen Klebemassenschicht die Verankerung zwischen diesen beiden Schichten (Trennkraft) signifikant verbessert werden konnte.

**Tabelle 8: Ergebnisse aus dem T-Peel-Test (Test 9) und die jeweils verwendeten Messbedingungen**

| Dosis zur Coronavorbehandlung des Schaums [W min/m²] | Dosis zur Coronavorbehandlung der Klebemasse [W min/m²] | Prozessgas | Abzugsgeschwindigkeit [mm/min] | Trennkraft [N/cm] |
|---|---|---|---|---|
| 100 | -^{#} | - | 300 | 3,2 |
| 100 | -^{#} | - | 30 | 2,4 |
| 100 | 33 | Luft | 300 | 3,0 |
| 100 | 33 | Luft | 30 | 2,5 |
| 100 | 50 | Luft | 300 | 7,1 |
| 100 | 50 | Luft | 30 | 4,9 |
| 100 | 66 | Luft | 300 | 3,3 |
| 100 | 66 | Luft | 30 | 2,9 |
| 100 | 33 | Stickstoff | 300 | 3,3 |
| 100 | 33 | Stickstoff | 30 | 2,8 |
| 100 | 50 | Stickstoff | 300 | 6,7 |
| 100 | 50 | Stickstoff | 30 | 4,6 |
| 100 | 66 | Stickstoff | 300 | 3,5 |
| 100 | 66 | Stickstoff | 30 | 2,8 |

| | | | | |
|---|---|---|---|---|
| ^{#} keine Coronavorbehandlung der Klebemasse | | | | |

## Patentansprüche

1. Haftklebemasse, umfassend zumindest eine Polymerkomponente auf Basis einer Monomermischung enthaltend mindestens folgende Monomere:
i.a) 50 bis 89,5 Gew.-% zumindest einen Acrylsäureester und/oder Methacrylsäureester mit der folgenden Formel:
CH₂=C(R₁)(COOR₂),
wobei
R₁ = H und R₂ ein linearer Alkylrest mit 2 bis 10 C-Atomen oder ein verzweigter, nichtcyclischer Alkylrest mit mindestens 4 C-Atomen ist
und/oder
R₁ = CH₂ und R₂ ein linearer Alkylrest mit 8 bis 10 C-Atomen oder ein verzweigter, nichtcyclischer Alkylrest mit mindestens 10 C-Atomen ist,
i.b) 5 bis 20 Gew.-% zumindest ein N-Alkyl-substituiertes Acrylamid
i.c) 5 bis 25 Gew.-% zumindest ein Acrylsäureester und/oder Methacrylsäureester mit der folgenden Formel:
CH₂=C(R₃)(COOR₄),
wobei R₃ = H oder CH₃ und R₄ ein linearer Alkylrest mit mindestens 12 C-Atomen ist;
i.d) 0,5 bis 5 Gew.-% Acrylsäure und/oder Methacrylsäure,
wobei die Mengenangaben jeweils auf die Monomermischung bezogen sind.

2. Haftklebemasse nach Anspruch 1, **dadurch gekennzeichnet, dass**
als N-Alkyl-substituierkes Acrylamid im Sinne des Monomers i.b) N-Butylacrylamid, N-sec-Butylacrylamid, N-tert-Butylacrylamid, N-Isopropylacrylamid, N,N-Diisopropylacrylamid, N,N-Dibutylacrylamid, N,N-Dimethylacrylamid und/oder N,N-Diethylacrylamid eingesetzt werden.

3. Haftklebemasse nach einem der vorangehenden Ansprüche, **dadurch gekennzeichnet, dass**
als Acrylsäureester bzw. Methacrylsäureester der Formel CH₂=C(R₃)(COOR₄), wobei R₄ ein linearer Alkylrest mit mindestens 12 C-Atomen ist, im Sinne des Monomers i.c) Stearylacrylat und/oder Stearylmethacrylat eingesetzt wird.

4. Haftklebemasse nach einem der vorangehenden Ansprüche, **dadurch gekennzeichnet, dass** es sich bei der Polymerkomponente der Haftklebemasse um eine solche handelt, die zu mehr als 99 Gew.-% auf (Meth)Acrylmonomeren basiert.

5. Haftklebemasse nach Anspruch 4, **dadurch gekennzeichnet, dass**
es sich bei der Polymerkomponente der Haftklebemasse um eine solche handelt, die zu 100 Gew.-% auf (Meth)Acrylmonomeren basiert.

6. Hafklebemasse nach einem der Ansprüche 4 oder 5, **dadurch gekennzeichnet, dass** es sich bei den (Meth)Acrylmonomeren ausschließlich um (Meth)Acrylmonomeren gemäß der Definitionen i.a) bis i.d) handelt.

7. Haftklebemasse nach einem der Ansprüche 1 bis 6, **dadurch gekennzeichnet, dass**
die Polymerkomponente der Haftklebemasse auf einer Monomermischung basiert, die zusätzlich zu den Monomeren i.a) bis i.d) bis zu 10 Gew.-%, bezogen auf die Monomermischung,
ii.) copolymerisierbare weitere Monomere
umfasst.

8. Haftklebemasse nach Anspruch 7, **dadurch gekennzeichnet, dass**
als copolymerisierbare weitere Monomere im Sinne der Gruppe ii.) ganz oder teilweise Monomere mit zumindest einer einfach oder mehrfach ungesättigten Kohlenstoff-Kohlenstoff-Bindung und/oder ganz oder teilweise solche mit zumindest einer einfach oder mehrfach ungesättigten Kohlenstoff-Heteroatom-Bindung eingesetzt werden.

9. Haftklebemasse nach einem der vorangehenden Ansprüche, **dadurch gekennzeichnet, dass**
die Polymerkomponente bzw. die Polymerkomponenten basierend auf Monomermischungen umfassend die Monomere i.a) bis i.d) mindestens 90 Gew.-% der Haftklebemasse ausmachen.

10. Haftklebemasse nach einem Anspruch 9, **dadurch gekennzeichnet, dass**
die Polymerkomponente bzw. die Polymerkomponenten basierend auf Monomermischungen umfassend die Monomere i.a) bis i.d) mehr als 99,9 Gew.-% der Haftklebemasse ausmachen.

11. Haftklebemasse nach einem der vorangehenden Ansprüche, **dadurch gekennzeichnet, dass**
keine oligo- und (niedrig)polymeren Verbindungen enthalten sind, deren zahlenmittleres Molekulargewicht Mₙ nicht mehr als 5.000 g/mol beträgt.

12. Haftklebemasse nach einem der vorangehenden Ansprüche, **dadurch gekennzeichnet, dass**
sie vernetzt vorliegt, wobei ihr Vernetzungszustand einem Mikroscherweg - in Bezug auf die Scherung in 15 min eines anfänglich 13 mm x 10 mm großen Flächenstückes mit einer Dicke entsprechend einem Flächengewicht von 50 g/m² bei Belastung mit 1,0 N in Richtung der größeren Längenausdehnung bei 40 °C - zwischen 100 µm und 300 µm.

13. Verfahren zur Herstellung einer vernetzten Haftklebemasse nach einem der Ansprüche 1 bis 11, **dadurch gekennzeichnet, dass**
zunächst durch radikalische Polymerisation aus einer Monomermischung umfassend die Monomere i.a) bis i.d) eine Polymerkomponente hergestellt wird, während oder nach der Polymerisation zumindest ein thermischer Vernetzer zugesetzt wird, der Polymerkomponente gegebenenfalls weitere Polymerkomponenten auf Basis einer Monomermischung umfassend die Monomere i.a) bis i.d) und/oder ggf. weitere Additive beigemischt werden, und die mit dem Vernetzer vermischte Haftklebemasse durch Zufuhr thermischer Energie so weitgehend vernetzt wird, dass ihr Vernetzungszustand einem Mikroscherweg - in Bezug auf die Scherung in 15 min eines anfänglich 13 mm x 10 mm großen Flächenstückes mit einer Dicke entsprechend einem Flächengewicht von 50 g/m² bei Belastung mit 1,0 N in Richtung der größeren Längenausdehnung bei 40 °C - zwischen 100 µm und 300 µm entspricht.

14. Haftklebemasse nach Anspruch 12 oder Verfahren nach Anspruch 13, **dadurch gekennzeichnet, dass**
der Vernetzungszustand einem Mikroscherweg - in Bezug auf die Scherung in 15min eines anfänglich 13 mm x 10 mm großen Flächenstückes mit einer Dicke entsprechend einem Flächengewicht von 50 g/m² bei Belastung mit 1,0 N in Richtung der größeren Längenausdehnung bei 40 °C - zwischen 125 µm bis 250 µm entspricht.

15. Verfahren nach Anspruch 10, **dadurch gekennzeichnet, dass** als thermische Vernetzer kovalent reagierende Vernetzer und/oder koordinative Vernetzer eingesetzt werden.

16. Verfahren nach Anspruch 15, **dadurch gekennzeichnet, dass**
als kovalent reagierende Vernetzer Epoxide, Isocyanate und/oder Aziridine eingesetzt werden und/oder dass als koordinative Vernetzer Metallchelate eingesetzt werden

17. Verfahren nach Anspruch 16, **dadurch gekennzeichnet, dass**
als Vernetzer N,N,N',N'-Tetrakis(oxiranylmethyl)-1,3-benzendimethanamin in einer Menge von 0,03 bis 0,1 Gew.-Teilen, bezogen auf 100 Gew.-Teile der Polymerkomponente (Iösemittelfrei), eingesetzt wird.

18. Verfahren nach Anspruch 17, **dadurch gekennzeichnet, dass**
N,N,N',N'-Tetrakis(oxiranylmethyl)-1,3-benzendimethanamin in einer Menge von 0,04 bis 0,07 Gew.-Teilen, bezogen auf 100 Gew.-Teile der Polymerkomponente (lösemittelfrei), eingesetzt wird.

19. Verwendung einer Haftklebemasse nach einem der Ansprüche 1 bis 12 oder einer nach einem der Ansprüche 13 bis 18 hergestellten Haftklebemasse zum Verkleben flexibler Druckplatten auf gekrümmten Oberflächen.

## Claims

1. Pressure-sensitive adhesive having at least one polymer component based on a monomer mixture comprising at least the following monomers:
i.a) 50 to 89.5 wt% of at least one acrylic ester and/or methacrylic ester having the following formula:
CH₂=C (R₁) (COOR₂),
where
R₁ = H and R₂ is a linear alkyl radical having 2 to 10 C atoms or a branched, noncyclic alkyl radical having at least 4 C atoms
and/or
R₁= CH₃ and R₂ is a linear alkyl radical having 8 to 10 C atoms or a branched, noncyclic alkyl radical having at least 10 C atoms,
i.b) 5 to 20 wt% of at least one N-alkyl-substituted acrylamide,
i.c) 5 to 25 wt% of at least one acrylic ester and/or methacrylic ester having the following formula:
CH₂=C (R₃) (COOR₄),
where
R₃ = H or CH₃ and R₄ is a linear alkyl radical having at least 12 C atoms,
i.d) 0.5 to 5 wt% of acrylic acid and/or methacrylic acid, the amounts figures being based in each case on the monomer mixture.

2. Pressure-sensitive adhesive according to Claim 1, **characterized in that** said N-alkyl-substituted acrylamide, used in the sense of monomer i.b) comprises N-butylacrylamide, N-sec-butylacrylamide, N-tert-butylacrylamide, N-isopropylacrylamide, N,N-diisopropylacrylamide, N,N-dibutylacrylamide, N,N-dimethylacrylamide and/or N,N-diethylacrylamide.

3. Pressure-sensitive adhesive according to either of the preceding claims, **characterized in that** said acrylic ester and/or methacrylic ester of the formula CH₂=C(R₃) (COOR₄) where R₄ is a linear alkyl radical having at least 12 C atoms used in the sense of monomer i.c) comprises stearyl acrylate and/or stearyl methacrylate.

4. Pressure-sensitive adhesive according to any of the preceding claims, **characterized in that** the polymer component of the pressure-sensitive adhesive is a component based to an extent of more than 99 wt% on (meth)acrylic monomers.

5. Pressure-sensitive adhesive according to Claim 4, **characterized in that** the polymer component of the pressure-sensitive adhesive is a component based to an extent of 100 wt% on (meth)acrylic monomers.

6. Pressure-sensitive adhesive according to either of Claims 4 and 5, **characterized in that** the (meth)acrylic monomers are exclusively (meth)acrylic monomers as per definitions i.a) to i.d).

7. Pressure-sensitive adhesive according to any of Claims 1 to 6, **characterized in that**
the polymer component of the pressure-sensitive adhesive is based on a monomer mixture which, further to the monomers i.a) to i.d), comprises up to 10 wt%, based on the monomer mixture, of
ii.) copolymerizable further monomers.

8. Pressure-sensitive adhesive according to Claim 7, **characterized in that**
said copolymerizable further monomers used in the sense of group ii.) comprise wholly or partly monomers having at least one singly or multiply unsaturated carbon-carbon bond and/or wholly or partly those having at least one singly or multiply unsaturated carbon-heteroatom bond.

9. Pressure-sensitive adhesive according to any of the preceding claims, **characterized in that**
the polymer component or components based on monomer mixtures comprising the monomers i.a) to i.d) make up at least 90 wt% of the pressure-sensitive adhesive.

10. Pressure-sensitive adhesive according to Claim 9, **characterized in that**
the polymer component or components based on monomer mixtures comprising the monomers i.a) to i.d) make up more than 99.9 wt% of the pressure-sensitive adhesive.

11. Pressure-sensitive adhesive according to any of the preceding claims, **characterized in that**
no oligomeric and (low-)polymeric compounds are included whose number-average molecular weight Mₙ is not more than 5000 g/mol.

12. Pressure-sensitive adhesive according to any of the preceding claims, **characterized in that**
it is in crosslinked form, its state of crosslinking to a micro-shear travel - in respect of the shearing in 15 minutes of a sheet section initially measuring 13 mm x 10 mm with a thickness corresponding to a basis weight of 50 g/m² under a load of 1.0 N in the direction of the greater longitudinal extent at 40°C - of between 100 µm and 300 µm.

13. Method for producing a crosslinked pressure-sensitive adhesive according to any of Claims 1 to 11, **characterized in that**
a polymer component is first of all prepared by radical polymerization from a monomer mixture comprising the monomers i.a) to i.d), at least one thermal crosslinker is added during or after the polymerization, the polymer component is optionally admixed with further polymer components based on a monomer mixture comprising the monomers i.a) to i.d) and/or optionally further additives, and the pressure-sensitive adhesive mixed with the crosslinker is crosslinked by supply of thermal energy to an extent such that its state of crosslinking corresponds to a micro-shear travel - in respect of the shearing in 15 minutes of a sheet section initially measuring 13 mm x 10 mm with a thickness corresponding to a basis weight of 50 g/m² under a load of 1.0 N in the direction of the greater longitudinal extent at 40°C - of between 100 µm and 300 µm.

14. Pressure-sensitive adhesive according to Claim 12 or method according to Claim 13, **characterized in that**
the state of crosslinking corresponds to a micro-shear travel - in respect of the shearing in 15 minutes of a sheet section initially measuring 13 mm x 10 mm with a thickness corresponding to a basis weight of 50 g/m² under a load of 1.0 N in the direction of the greater longitudinal extent at 40°C - of between 125 µm to 250 µm.

15. Method according to Claim 10, **characterized in that** said thermal crosslinkers used comprise covalently reacting crosslinkers and/or coordinative crosslinkers.

16. Method according to Claim 15, **characterized in that** said covalently reacting crosslinkers comprise epoxides, isocyanates and/or aziridines, and/or said coordinative crosslinkers used comprise metal chelates.

17. Method according to Claim 16, **characterized in that** said crosslinker used comprises N,N,N',N'-tetrakis(oxiranylmethyl)-1,3-benzenedimethanamine in an amount of 0.03 to 0.1 part by weight, based on 100 parts by weight of the polymer component (solvent-free).

18. Method according to Claim 17, **characterized in that** N,N,N',N'-tetrakis(oxiranylmethyl)-1,3-benzenedimethan-amine is used in an amount of 0.04 to 0.07 parts by weight, based on 100 parts by weight of the polymer component (solvent-free).

19. Use of a pressure-sensitive adhesive according to any of Claims 1 to 12 or of a pressure-sensitive adhesive produced according to any of Claims 13 to 18 for bonding flexible printing plates to curved surfaces.

## Revendications

1. Masse autoadhésive, comprenant au moins un composant polymère à base d'un mélange de monomères contenant au moins les monomères suivantes :
i.a) 50 à 89,5% en poids d'au moins un ester de l'acide acrylique et/ou de l'acide méthacrylique présentant la formule suivante :
CH₂=C (R₁) (COOR₂),
dans laquelle
R₁ = H et R₂ représente un radical alkyle linéaire comprenant 2 à 10 atomes de carbone ou un radical alkyle ramifié, non cyclique comprenant au moins 4 atomes de carbone et/ou
R₁ = CH₃ et R₂ représente un radical alkyle linéaire comprenant 8 à 10 atomes de carbone ou un radical alkyle ramifié, non cyclique comprenant au moins 10 atomes de carbone,
i.b) 5 à 20% en poids d'au moins un acrylamide au moins N-substitué par alkyle,
i.c) 5 à 25% en poids d'au moins un ester de l'acide acrylique et/ou de l'acide méthacrylique présentant la formule suivante :
CH₂=C (R₃) (COOR₄),
dans laquelle
R₃ = H ou CH₃ et R₄ représente un radical alkyle linéaire comprenant au moins 12 atomes de carbone ;
i.d) 0,5 à 5% en poids d'acide acrylique et/ou d'acide méthacrylique,
les indications de quantités se rapportant à chaque fois au mélange de monomères.

2. Masse autoadhésive selon la revendication 1, **caractérisée en ce qu'**on utilise, comme acrylamide N-substitué par alkyle dans le sens du monomère i.b), du N-butylacrylamide, du N-sec-butylacrylamide, du N-tert-butylacrylamide, du N-isopropylacrylamide, du N,N-diisopropylacrylamide, du N,N-dibutylacrylamide, du N,N-diméthylacrylamide et/ou du N,N-diéthylacrylamide.

3. Masse autoadhésive selon l'une quelconque des revendications précédentes, **caractérisée en ce qu'**on utilise, comme ester de l'acide acrylique ou de l'acide méthacrylique de formule CH₂=C(R₃) (COOR₄), R₄ représentant un radical alkyle linéaire comprenant au moins 12 atomes de carbone, dans le sens du monomère i.c), de l'acrylate de stéaryle et/ou du méthacrylate de stéaryle.

4. Masse autoadhésive selon l'une quelconque des revendications précédentes, **caractérisée en ce qu'**il s'agit, pour le composant polymère de la masse autoadhésive, d'un composant qui est à base, à raison de plus de 99% en poids, de monomères de (méth)acryle.

5. Masse autoadhésive selon la revendication 4, **caractérisée en ce qu'**il s'agit, pour le composant polymère de la masse autoadhésive, d'un composant qui est à base, à raison de 100% en poids, de monomères de (méth)acryle.

6. Masse autoadhésive selon l'une quelconque des revendications 4 ou 5, **caractérisée en ce qu'**il s'agit, pour les monomères de (méth)acryle, exclusivement de monomères de (méth)acryle selon les définitions i.a) à i.d).

7. Masse autoadhésive selon l'une quelconque des revendications 1 à 6, **caractérisée en ce que** le composant polymère de la masse autoadhésive est à base d'un mélange de monomères qui comprend, en plus des monomères i.a) à i.d), jusqu'à 10% en poids, par rapport au mélange de monomères
ii.) d'autres monomères copolymérisables.

8. Masse autoadhésive selon la revendication 7, **caractérisée en ce qu'**on utilise, comme autres monomères copolymérisables dans le sens du groupe ii.), totalement ou en partie, des monomères présentant au moins une liaison carbone-carbone monoinsaturée ou polyinsaturée et/ou, totalement ou partiellement, des monomères présentant au moins une liaison carbone-hétéroatome monoinsaturée ou polyinsaturée.

9. Masse autoadhésive selon l'une quelconque des revendications précédentes, **caractérisée en ce que** le composant polymère ou les composants polymères à base de mélanges de monomères comprenant les monomères i.a) à i.d) représente (nt) au moins 90% en poids de la masse autoadhésive.

10. Masse autoadhésive selon la revendication 9, **caractérisée en ce que** le composant polymère ou les composants polymères à base de mélanges de monomères comprenant les monomères i.a) à i.d) représente(nt) plus de 99,9% en poids de la masse autoadhésive.

11. Masse autoadhésive selon l'une quelconque des revendications précédentes, **caractérisée en ce qu'**elle ne contient pas de composés oligomères ou polymères (de bas poids moléculaire) dont le poids moléculaire numérique moyen Mₙ n'est pas supérieur à 5000 g/mole.

12. Masse autoadhésive selon l'une quelconque des revendications précédentes, **caractérisée en ce qu'**elle se trouve sous forme réticulée, son état de réticulation une voie de microcisaillement - par rapport à un cisaillement pendant 15 minutes d'un morceau surfacique présentant au départ une taille de 13 mm x 10 mm et une épaisseur correspondant à un poids surfacique de 50 g/m² lors d'une sollicitation de 1,0 N dans le sens de la dimension longitudinale la plus grande, à 40°C - entre 100 µm et 300 µm.

13. Procédé pour la préparation d'une masse autoadhésive réticulée selon l'une quelconque des revendications 1 à 11, **caractérisé en ce qu'**on prépare d'abord, par polymérisation radicalaire, à partir d'un mélange de monomères comprenant les monomères i.a) à i.d), un composant polymère, on ajoute pendant ou après la polymérisation au moins un réticulant thermique, on mélange au composant polymère le cas échéant d'autres composants polymères à base d'un mélange de monomères comprenant les monomères i.a) à i.d) et/ou le cas échéant d'autres additifs et on réticule la masse autoadhésive mélangée avec le réticulant par addition d'énergie thermique dans une mesure telle que son état de réticulation correspond à une voie de microcisaillement - par rapport à un cisaillement pendant 15 minutes d'un morceau surfacique présentant au départ une taille de 13 mm x 10 mm et une épaisseur correspondant à un poids surfacique de 50 g/m² lors d'une sollicitation de 1,0 N dans le sens de la dimension longitudinale la plus grande, à 40°C - entre 100 µm et 300 µm.

14. Masse autoadhésive selon la revendication 12 ou procédé selon la revendication 13, caractérisé(e) en ce que l'état de réticulation correspond à une voie de microcisaillement - par rapport à un cisaillement pendant 15 minutes d'un morceau surfacique présentant au départ une taille de 13 mm x 10 mm et une épaisseur correspondant à un poids surfacique de 50 g/m² lors d'une sollicitation de 1,0 N dans le sens de la dimension longitudinale la plus grande, à 40°C - entre 125 µm et 250 µm.

15. Procédé selon la revendication 10, **caractérisé en ce qu'**on utilise, comme réticulants thermiques, des réticulants à réaction covalente et/ou des réticulants de coordination.

16. Procédé selon la revendication 15, **caractérisé en ce qu'**on utilise, comme réticulants à réaction covalente, des époxydes, des isocyanates et/ou des aziridines et/ou **en ce qu'**on utilise, comme réticulants de coordination, des chélates métalliques.

17. Procédé selon la revendication 16, **caractérisé en ce qu'**on utilise, comme réticulant, de la N,N,N',N'-tétrakis(oxiranylméthyl)-1,3-benzènediméthanamine en une quantité de 0,03 à 0,1 partie en poids par rapport à 100 parties en poids du composant polymère (sans solvant).

18. Procédé selon la revendication 17, **caractérisé en ce qu'**on utilise de la N,N,N',N'-tétrakis(oxiranylméthyl)-1,3-benzènediméthanamine en une quantité de 0,04 à 0,07 partie en poids par rapport à 100 parties en poids du composant polymère (sans solvant).

19. Utilisation d'une masse autoadhésive selon l'une quelconque des revendications 1 à 12 ou d'une masse autoadhésive préparée selon l'une quelconque des revendications 13 à 18 pour coller des plaques d'impression souples sur des surfaces courbes.
